# EUROPEAN PATENT APPLICATION

(11) **EP 3 133 509 A1**
(43) Date of publication of application: **22.02.2017**
(21) Application number: 16174625.0
(22) Date of filing: 15.06.2016
(51) Int. Cl.: G06F 17/30, G09G 3/00

(54) **AUDIO COVER DISPLAY METHOD AND DEVICE**

(30) Priority: 21.08.2015 CN 201510518879
(71) Applicant: Xiaomi Inc., Beijing 100085 (CN)
(72) Inventor: LIU, Xushu, Beijing 100085 (CN); HE, Lin, Beijing 100085 (CN); ZHOU, Can, Beijing 100085 (CN)
(74) Representative: Hughes, Andrea Michelle

(57) **Abstract**

A method and device for displaying an audio cover are provided. The method includes: receiving from a terminal an acquisition request of requesting for a target cover image 241; acquiring the target cover image according to the acquisition request, wherein the target cover image is a dynamic cover image and/or a static cover image corresponding to an audio 202; and sending the target cover image to the terminal 203, wherein the terminal is configured to display the target cover image. By the embodiments of the present disclosure, the problem that the display form of an audio cover is undiversified is solved.

## Description

### TECHNICAL FIELD

The present disclosure generally relates to the field of electronic technology applications, and more particularly, to a method and device for displaying an audio cover.

### BACKGROUND

Along with development of sciences and technologies, some audio playing Applications (Apps) are increasingly used, and common audio playing Apps may include music player Apps, music radio Apps or the like.

In a related technology, multiple audio covers may be displayed on a display interface of an audio playing App installed in a terminal as an audio entry, these audio covers may be pictures such as an album cover, a singer cover and a song menu cover, and after receiving a triggering instruction generated by clicking the audio covers by a user, the terminal may correspondingly display an audio list corresponding to the audio covers for the user to click for playing.

The embodiments of the present disclosure are presented to solve the problem that the display form of an audio cover cannot be changed.

### SUMMARY

Accordingly, the embodiments of the present disclosure provide a method and device for displaying an audio cover, in accordance with claims which follow.

According to a first aspect of the embodiments of the present disclosure, a method for displaying an audio cover is provided, which may include:
receiving from a terminal an acquisition request requesting a target cover image;
acquiring the target cover image according to the acquisition request, wherein the target cover image is a dynamic cover image and/or a static cover image corresponding to audio content; and
sending the target cover image to the terminal, wherein the terminal is configured to display the target cover image.

Optionally, the acquiring the target cover image according to the acquisition request may include:
determining target audio data according to the acquisition request;
determining target scene information and a target static image according to the target audio data, wherein the target scene information is for representing a scene characteristic associated with the target audio data;
acquiring an auxiliary dynamic image associated with the target scene information; and adopting the auxiliary dynamic image to process the target static image to obtain the target cover image.

Optionally, the acquisition request may include target scene information, wherein the target scene information is for representing a scene characteristic of an environment where a terminal is located;
the acquiring the target cover image according to the acquisition request may include: acquiring a target static image according to the acquisition request;
acquiring an auxiliary dynamic image associated with the target scene information; and adopting the auxiliary dynamic image to process the target static image to obtain the target cover image.

Optionally, the acquiring an auxiliary dynamic image associated with the target scene information may include:
querying a preset relationship between scene information and a dynamic image;
if there exists one dynamic image associated with the target scene information in the preset relationship between scene information and a dynamic image , determining the dynamic image associated with the target scene information as the auxiliary dynamic image; and
if there exist at least two dynamic images associated with the target scene information in the preset relationship between scene information and a dynamic image , selecting one dynamic image from the at least two dynamic images associated with the target scene information as the auxiliary dynamic image according to a preset rule.

Optionally, the selecting one dynamic image from the at least two dynamic images associated with the target scene information as the auxiliary dynamic image according to a preset rule may include:
randomly selecting one dynamic image from the at least two dynamic images associated with the target scene information as the auxiliary dynamic image;
or, selecting a dynamic image which appears for the times from the at least two dynamic images associated with the target scene information as the auxiliary dynamic image;
or, superposing the at least two dynamic images associated with the target scene information to form the auxiliary dynamic image;
or, providing the at least two dynamic images associated with the target scene information for the terminal, receiving a selection instruction sent by the terminal, wherein the selection instruction is for indicating a dynamic image selected from the at least two dynamic images associated with the target scene information by a user, and determining the dynamic image selected by the user as the auxiliary dynamic image.

Optionally, the target scene information may include at least one of the following: a season, a geographical location, a landmark, weather, mood and time.

Optionally, the adopting the auxiliary dynamic image to process the target static image to obtain the target cover image may include:
superposing the auxiliary dynamic image to the target static image to obtain the target cover image;
or, replacing the target static image with the auxiliary dynamic image to obtain the target cover image;
or, combining the auxiliary dynamic image and the target static image to obtain the target cover image.

Optionally, the method may further include:
judging whether the auxiliary dynamic image associated with the target scene information is stored in a server or not; and
if the auxiliary dynamic image is not stored in the server, determining the target static image acquired according to the acquisition request as the target cover image.

Optionally, the acquiring the target cover image according to the acquisition request may include:
determining target audio data according to the acquisition request; and
determining a dynamic image which is acquired from a preset dynamic cover database and corresponds to the target audio data as the target cover image, wherein the dynamic cover database is configured to record audio information and each piece of audio information includes audio data and a dynamic image.

Optionally, the method may further include:
judging whether the dynamic image corresponding to the target audio data is stored in the dynamic cover database or not; and
if the dynamic image corresponding to the target audio data is not stored in the dynamic cover database, determining the target static image acquired according to the acquisition request to be the target cover image.

Optionally, the method may further include:
receiving added audio information, wherein the added audio information includes audio data and a static image;
determining scene information according to the audio data, wherein the scene information is for representing a scene characteristic associated with the audio data;
determining an auxiliary dynamic image associated with the scene information;
adopting the auxiliary dynamic image to process the static image to obtain a dynamic image;
adopting the dynamic image to update the added audio information to obtain updated audio information, wherein the updated audio information includes the audio data and the dynamic image; and
storing the updated audio information into the preset dynamic cover database, wherein the audio information recorded in the preset dynamic cover database includes the dynamic image.

Optionally, the method may further include:
receiving added audio information, wherein the added audio information includes a dynamic image; and
storing the added audio information into the preset dynamic cover database, wherein the audio information recorded in the preset dynamic cover database includes the dynamic image.

Optionally, the target cover image is obtained by superposing the auxiliary dynamic image to the target static image, and the method may further include:
sending a display parameter to the terminal, wherein the terminal is configured to set a display characteristic of the auxiliary dynamic image according to the display parameter and the display parameter includes at least one of the following: transparency, a resolution and an image position.

Optionally, the target cover image may include any one of a dynamic picture, a video and dynamic display information, the dynamic display information may include a dynamic parameter and a static picture, and the dynamic parameter may be for indicating a changing characteristic of the display parameter during display of the static picture.

According to a second aspect of the embodiments of the present disclosure, a method for displaying an audio cover is provided, which may include:
when an audio cover is required to be acquired, sending an acquisition request requesting a target cover image to a server, wherein the server is configured to acquire the target cover image according to the acquisition request and the target cover image is a dynamic cover image and/or a static cover image corresponding to an audio;
receiving the target cover image sent by the server; and
when the audio cover is required to be displayed, displaying the pre-acquired target cover image.

Optionally, the displaying the pre-acquired target cover image may include:
displaying the pre-acquired target cover image in an image display area of a cover display interface of a terminal.

Optionally, the method may further include:
receiving at least two dynamic images which are provided by the server and associated with target scene information, wherein the target scene information is for representing a scene characteristic associated with target audio data, or, the target scene information is for representing a scene characteristic of an environment where a terminal is located;
receiving a dynamic image selected from the at least two dynamic images associated with the target scene information by a user; and
sending a selection instruction to the server, wherein the selection instruction includes the dynamic image selected by the user and the server is configured to determine the dynamic image selected by the user as an auxiliary dynamic image.

Optionally, the target cover image is obtained by superposing the auxiliary dynamic image to a target static image, and the method may further include:
receiving a display parameter sent by the server; and
setting a display characteristic of the auxiliary dynamic image according to the display parameter, wherein the display parameter includes at least one of the following:
   transparency, a resolution and an image position.

Optionally, the target cover image may include any one of a dynamic picture, a video and dynamic display information, the dynamic display information may include a dynamic parameter and a static picture, and the dynamic parameter may be for indicating a changing characteristic of the display parameter during display of the static picture;
the displaying the pre-acquired target cover image may include:
detecting content of the target cover image; and
if the target cover image includes the dynamic display information, displaying the static picture, and changing the characteristic of the display parameter during display of the static picture according to the dynamic parameter.

Optionally, the acquisition request may include target scene information, wherein the target scene information is for representing a scene characteristic of an environment where a terminal is located;
the method may further include:
determining the target scene information through an App which is installed in the terminal and associated with the target scene information;
or, displaying scene information prompting options, and receiving target scene information selected in the scene information prompting options by the user;
or, displaying a scene information input box, and receiving target scene information input in the scene information input box by the user;
or, sending an information acquisition request to a function server having a target scene information determination function, and receiving target scene information sent by the function server.

Optionally, the target scene information may include at least one of the following: a season, a geographical location, a landmark, weather, mood and time.

According to a third aspect of the embodiments of the present disclosure, a device for displaying an audio cover is provided, which may include:
a receiving module, configured to receive from a terminal an acquisition request requesting a target cover image;
an acquisition module, configured to acquire the target cover image according to the acquisition request, wherein the target cover image is a dynamic cover image and/or a static cover image corresponding to audio data; and
a sending module, configured to send the target cover image to the terminal, wherein the terminal is configured to display the target cover image.

Optionally, the acquisition module may include:
a data acquisition sub-module, configured to determine target audio data according to the acquisition request;
a determination sub-module, configured to determine target scene information and a target static image according to the target audio data, wherein the target scene information is for representing a scene characteristic associated with the target audio data;
an image acquisition sub-module, configured to acquire an auxiliary dynamic image associated with the target scene information; and
a processing sub-module, configured to adopt the auxiliary dynamic image to process the target static image to obtain the target cover image.

Optionally, the acquisition request may include target scene information, wherein the target scene information is for representing a scene characteristic of an environment where a terminal is located;
the acquisition module may include:
a determination sub-module, configured to acquire a target static image according to the acquisition request;
an image acquisition sub-module, configured to acquire an auxiliary dynamic image associated with the target scene information; and
a processing sub-module, configured to adopt the auxiliary dynamic image to process the target static image to obtain the target cover image.

Optionally, the image acquisition sub-module may include:
a querying sub-module, configured to query a preset relationship between scene information and a dynamic image;
a determination sub-module, configured to, if there exists one dynamic image associated with the target scene information in the preset relationship between scene information and a dynamic image , determine the dynamic image associated with the target scene information as the auxiliary dynamic image; and
a selection sub-module, configured to, if there exist at least two dynamic images associated with the target scene information in the preset relationship between scene information and a dynamic image , select one dynamic image from the at least two dynamic images associated with the target scene information as the auxiliary dynamic image according to a preset rule.

Optionally, the selection sub-module may be configured to:
randomly select one dynamic image from the at least two dynamic images associated with the target scene information as the auxiliary dynamic image;
or, select a dynamic image which appears the most times from the at least two dynamic images associated with the target scene information as the auxiliary dynamic image;
or, superpose the at least two dynamic images associated with the target scene information to form the auxiliary dynamic image;
or, provide the at least two dynamic images associated with the target scene information for the terminal, receive a selection instruction sent by the terminal, wherein the selection instruction is for indicating a dynamic image selected from the at least two dynamic images associated with the target scene information by a user, and determine the dynamic image selected by the user as the auxiliary dynamic image.

Optionally, the target scene information may include at least one of the following: a season, a geographical location, a landmark, weather, mood and time.

Optionally, the processing sub-module may be configured to:
superpose the auxiliary dynamic image to the target static image to obtain the target cover image;
or, replace the target static image with the auxiliary dynamic image to obtain the target cover image;
or, combine the auxiliary dynamic image and the target static image to obtain the target cover image.

Optionally, the device may further include:
a first judgment module, configured to judge whether the auxiliary dynamic image associated with the target scene information is stored in a server or not; and
a first determination module, configured to, if the auxiliary dynamic image is not stored in the server, determine the target static image acquired according to the acquisition request as the target cover image.

Optionally, the acquisition module may be configured to: determine the target audio data according to the acquisition request; and determine a dynamic image which is acquired from a preset dynamic cover database and corresponds to the target audio data as the target cover image, wherein the dynamic cover database is configured to record audio information and each piece of audio information includes audio data and a dynamic image.

Optionally, the device may further include:
a second judgment module, configured to judge whether the dynamic image corresponding to the target audio data is stored in the dynamic cover database or not; and
a second determination module, configured to, if the dynamic image corresponding to the target audio data is not stored in the dynamic cover database, determine the target static image acquired according to the acquisition request as the target cover image.

Optionally, the device may further include:
a first information receiving module, configured to receive added audio information, wherein the added audio information includes audio data and a static image;
an information determination module, configured to determine scene information according to the audio data, wherein the scene information is for representing a scene characteristic associated with the audio data;
an image determination module, configured to determine an auxiliary dynamic image associated with the scene information;
a processing module, configured to adopt the auxiliary dynamic image to process the target static image to obtain a target cover image ;
an updating module, configured to adopt the dynamic image to update the added audio information to obtain updated audio information, wherein the updated audio information includes the audio data and the dynamic image; and
a first storage module, configured to store the updated audio information into the preset dynamic cover database, wherein the audio information recorded in the preset dynamic cover database includes the dynamic image.

Optionally, the device may further include:
a second information receiving module, configured to receive added audio information, wherein the added audio information includes a dynamic image; and
a second storage module, configured to store the added audio information into the preset dynamic cover database, wherein the audio information recorded in the preset dynamic cover database includes the dynamic image.

Optionally, the target cover image is obtained by superposing the auxiliary dynamic image to the target static image, and the device may further include:
a second sending module, configured to send a display parameter to the terminal, wherein the terminal is configured to set a display characteristic of the auxiliary dynamic image according to the display parameter and the display parameter includes at least one of the following: transparency, a resolution and an image position.

Optionally, the target cover image may include any one of a dynamic picture, a video and dynamic display information, the dynamic display information may include a dynamic parameter and a static picture, and the dynamic parameter may be for indicating a changing characteristic of the display parameter during display of the static picture.

According to a fourth aspect of the embodiments of the present disclosure, a device for displaying an audio cover is provided, which may include:
a first sending module, configured to, when an audio cover is required to be acquired, send an acquisition request requesting a target cover image to a server, wherein the server is configured to acquire the target cover image according to the acquisition request and the target cover image is a dynamic cover image and/or a static cover image corresponding to audio data;
a first receiving module, configured to receive the target cover image sent by the server; and
a display module, configured to, when the audio cover is required to be displayed, display the pre-acquired target cover image.

Optionally, the display module may be configured to display the pre-acquired target cover image in an image display area of a cover display interface of a terminal.

Optionally, the device may further include:
a second receiving module, configured to receive at least two dynamic images which are provided by the server and associated with target scene information, wherein the target scene information is for representing a scene characteristic associated with target audio data, or, the target scene information is for representing a scene characteristic of an environment where a terminal is located;
a third receiving module, configured to receive a dynamic image selected from the at least two dynamic images associated with the target scene information by a user; and
a second sending module, configured to send a selection instruction to the server, wherein the selection instruction includes the dynamic image selected by the user and wherein the server is configured to determine the dynamic image selected by the user as an auxiliary dynamic image.

Optionally, the target cover image is obtained by superposing the auxiliary dynamic image to a target static image, and the device may further include:
a fourth receiving module, configured to receive a display parameter sent by the server; and
a setting module, configured to set a display characteristic of the auxiliary dynamic image according to the display parameter, wherein the display parameter includes at least one of the following: transparency, a resolution and an image position.

Optionally, the target cover image may include any one of a dynamic picture, a video and dynamic display information, the dynamic display information may include a dynamic parameter and a static picture, the dynamic parameter may be for indicating a changing characteristic of the display parameter during display of the static picture, and the display module may be configured to:
detect content of the target cover image; and
if the target cover image includes the dynamic display information, display the static picture, and change the characteristic of the display parameter during display of the static picture according to the dynamic parameter.

Optionally, the acquisition request may include target scene information, wherein the target scene information is for representing a scene characteristic of an environment where a terminal is located; and
the device may further include a scene information determination module, wherein the scene information determination module is configured to:
   determine the target scene information through an App which is installed in the terminal and associated with the target scene information;
   or, display scene information prompting options, and receive target scene information selected in the scene information prompting options by the user;
   or, display a scene information input box, and receive target scene information input in the scene information input box by the user;
   or, send an information acquisition request to a function server having a target scene information determination function, and receive target scene information sent by the function server.

Optionally, the target scene information may include at least one of the following: a season, a geographical location, a landmark, weather, mood and time.

According to a fifth aspect of the embodiments of the present disclosure, a device for displaying an audio cover is provided, which may include:
a processor; and
a memory configured to store an instruction executable by the processor,
wherein the processor may be configured to:
   receive from a terminal an acquisition request requesting a target cover image;
   acquire the target cover image according to the acquisition request, wherein the target cover image is a dynamic cover image and/or a static cover image corresponding to an audio; and
   send the target cover image to the terminal, wherein the terminal is configured to display the target cover image.

According to a sixth aspect of the embodiments of the present disclosure, a device for displaying an audio cover is provided, which may include:
a processor; and
a memory configured to store an instruction executable by the processor,
wherein the processor may be configured to:
   when an audio cover is required to be acquired, send an acquisition request requesting a target cover image to a server, wherein the server is configured to acquire the target cover image according to the acquisition request and the target cover image is a dynamic cover image and/or a static cover image corresponding to an audio;
   receive the target cover image sent by the server; and
   when the audio cover is required to be displayed, display the pre-acquired target cover image.

In one particular embodiment, the steps of the method for displaying an audio cover are determined by computer program instructions.

Consequently, according to a third aspect, the invention is also directed to a computer program for executing the steps of a method for displaying an audio cover as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program.

For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may achieve the following beneficial effects:
according to the audio cover display method and device provided by the embodiments of the present disclosure, a server acquires a target cover image according to an acquisition request sent by a terminal, and provides the target cover image for the terminal, and the terminal displays the target cover image; since the target cover image is a dynamic cover image and/or a static cover image, the display forms of the audio cover are enriched, and the audio cover may be displayed more flexibly.

It is to be understood that the above general description and detailed description below are only exemplary and explanatory and not intended to limit the present disclosure.

### BRIEF DESCRIPTION OF THE DRAWINGS

In order to describe embodiments of the present disclosure more clearly, the accompanying drawings required by description of the embodiments are simply introduced below. Obviously, the accompanying drawings described below are only some embodiments of the present disclosure, and those skilled in the art may also obtain other accompanying drawings according to these accompanying drawings without any creative work.
Fig. 1 is a schematic diagram illustrating an implementation environment involved in a method for displaying an audio cover, according to an exemplary embodiment.
Fig. 2 is a flow chart showing a method for displaying an audio cover, according to an exemplary embodiment.
Fig. 3 is a flow chart showing a method for displaying an audio cover, according to an exemplary embodiment.
Fig. 4-1 is a flow chart showing a method for displaying an audio cover, according to an exemplary embodiment.
Fig. 4-2 is a flow chart showing a method for acquiring a target cover image according to an acquisition request, according to an exemplary embodiment.
Fig. 4-3 is a flow chart showing a method for acquiring an auxiliary dynamic image associated with target scene information, according to an exemplary embodiment.
Fig. 4-4 is a display image showing continuous change of a static picture, according to an exemplary embodiment.

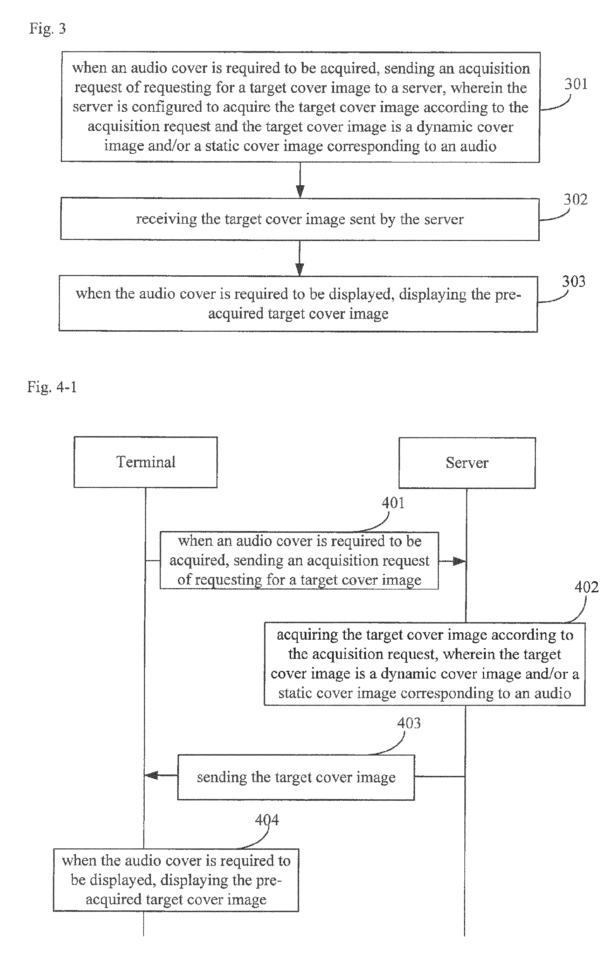

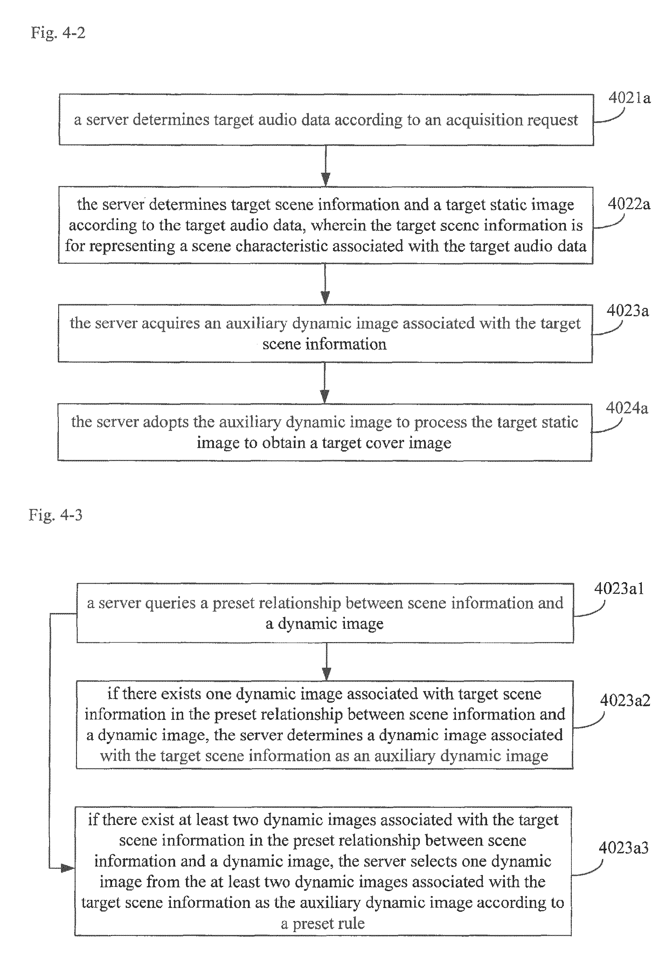

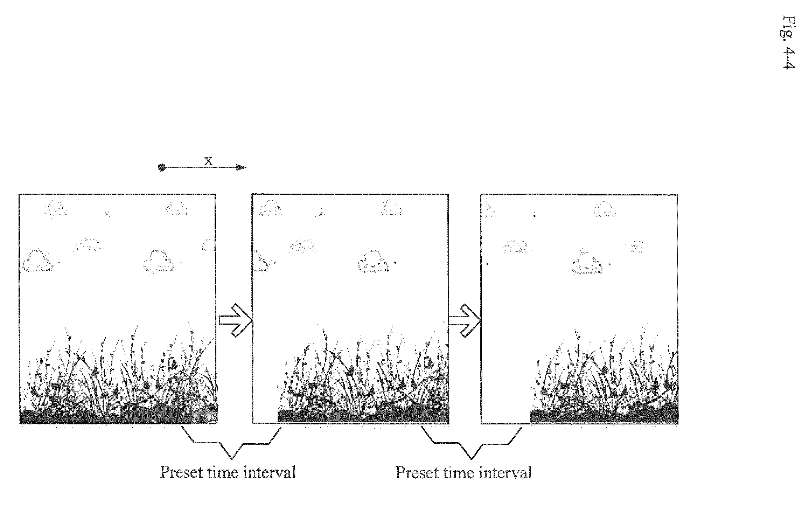

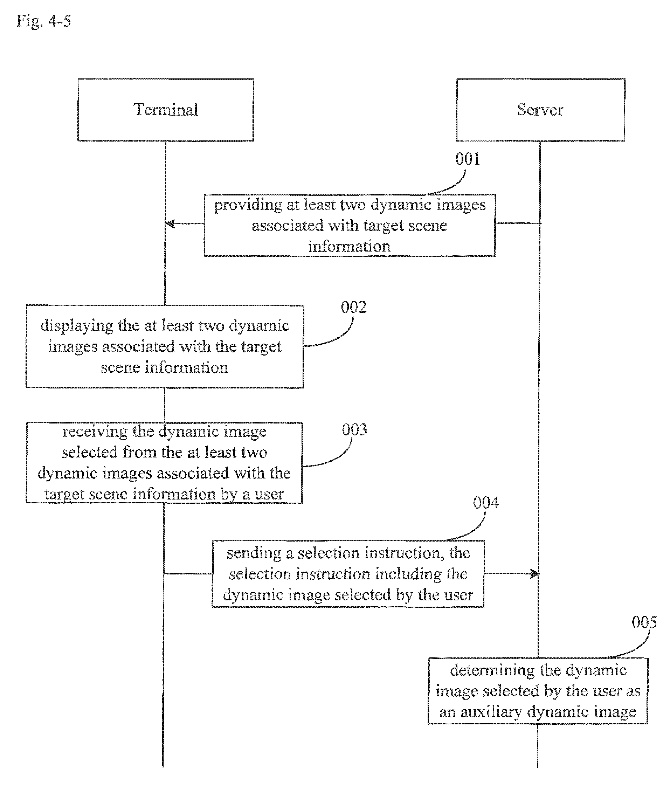

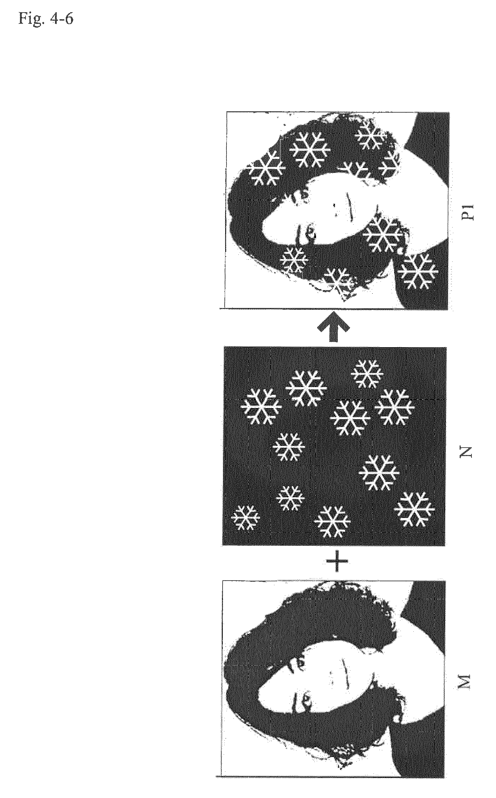

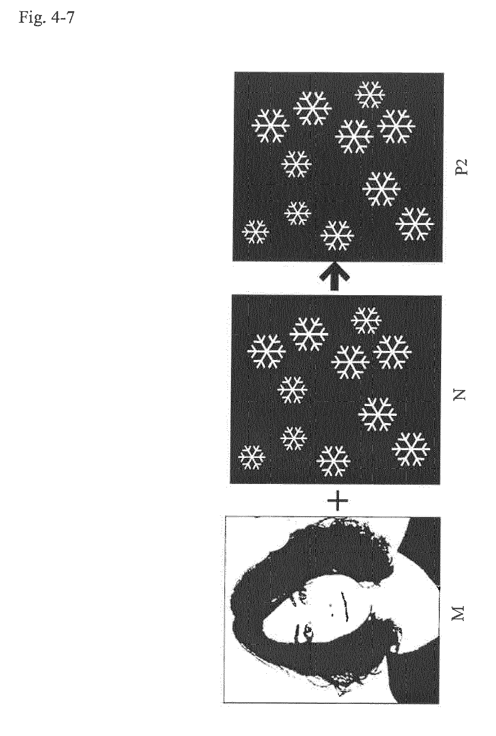

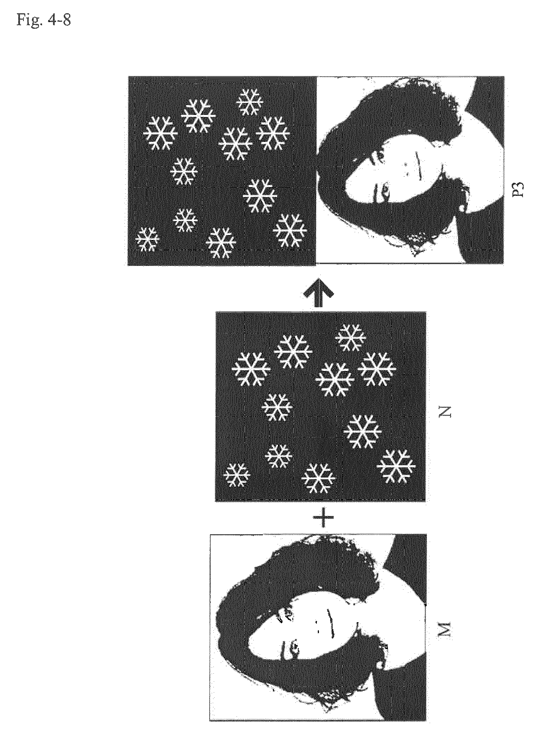

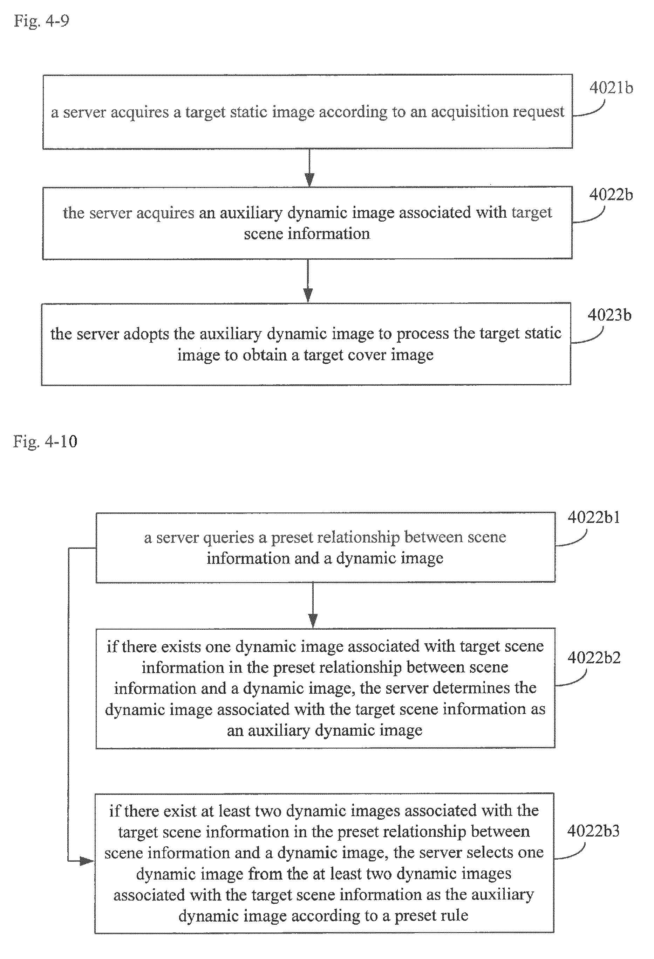

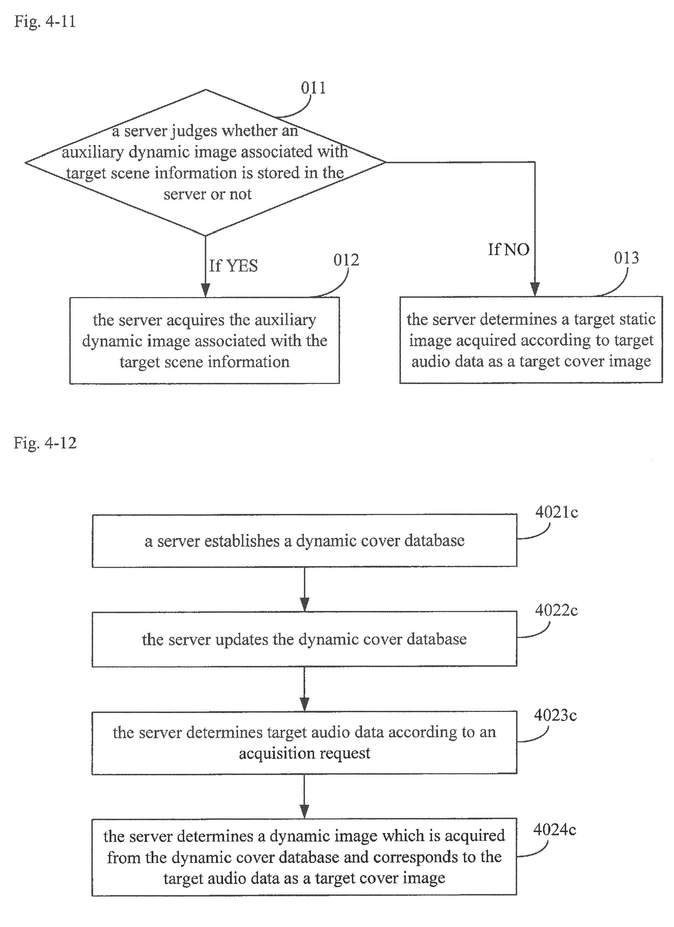

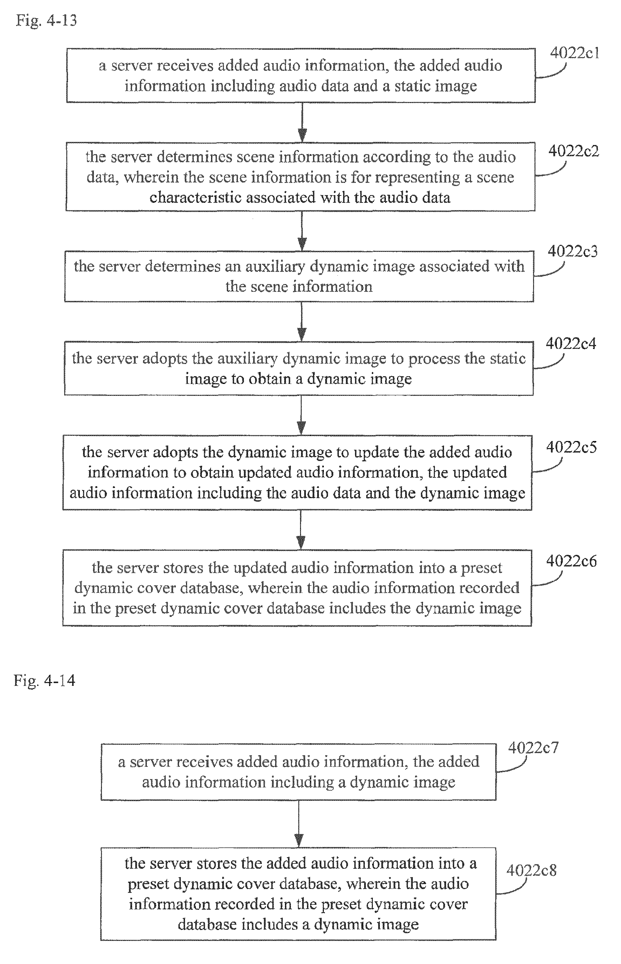

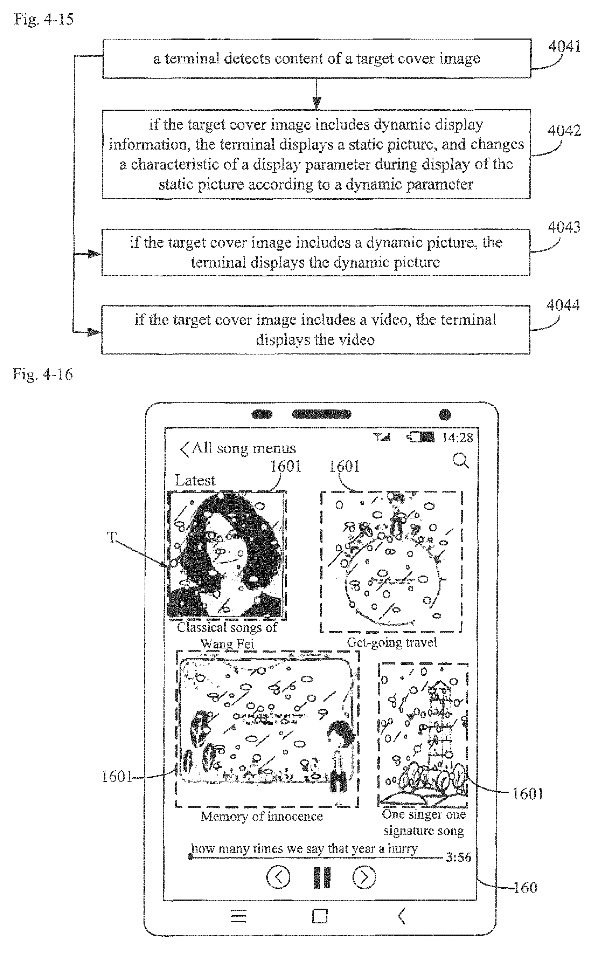

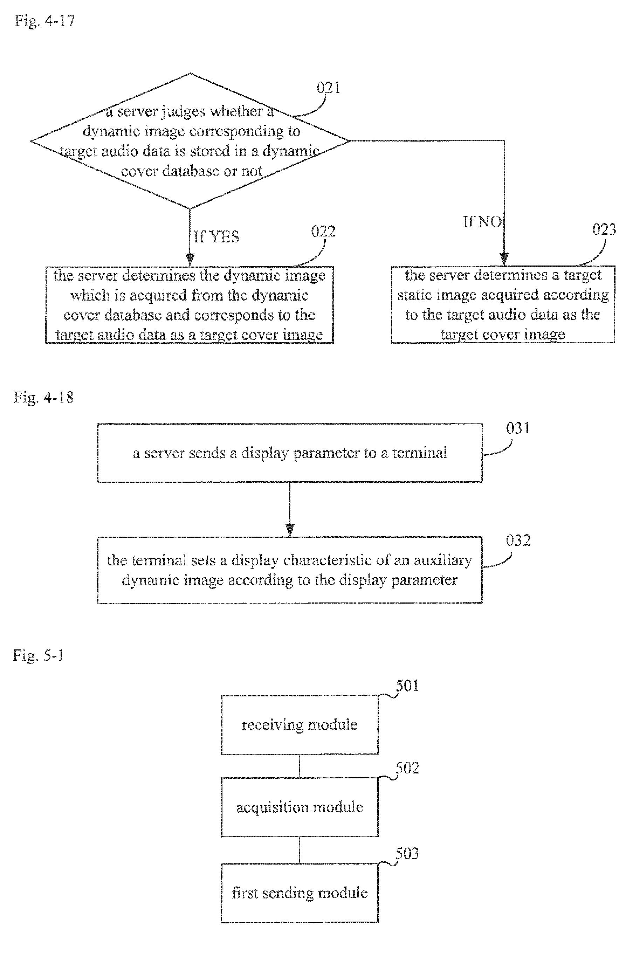

Fig. 4-5 is a flow chart showing a method for selecting an auxiliary dynamic image by a user, according to an exemplary embodiment.
Fig. 4-6 is a schematic diagram illustrating a method for adopting an auxiliary dynamic image to process a target static image to obtain a target cover image, according to an exemplary embodiment.
Fig. 4-7 is a schematic diagram illustrating a method for adopting an auxiliary dynamic image to process a target static image to obtain a target cover image, according to another exemplary embodiment.
Fig. 4-8 is a schematic diagram illustrating a method for adopting an auxiliary dynamic image to process a target static image to obtain a target cover image, according to another exemplary embodiment.
Fig. 4-9 is a schematic diagram illustrating a method for acquiring a target cover image according to an acquisition request, according to another schematic embodiment.
Fig. 4-10 is a flow chart showing a method for acquiring an auxiliary dynamic image associated with target scene information, according to another schematic embodiment.
Fig. 4-11 is a flow chart showing a method for acquiring a target cover image, according to an exemplary embodiment.
Fig. 4-12 is a flow chart showing a method for acquiring a target cover image according to an acquisition request, according to another schematic embodiment.
Fig. 4-13 is a flow chart showing a method for updating a dynamic cover database, according to a schematic embodiment.
Fig. 4-14 is a flow chart showing another method for updating a dynamic cover database, according to a schematic embodiment.
Fig. 4-15 is a flow chart showing a method for displaying a target cover image, according to a schematic embodiment.
Fig. 4-16 is a picture illustrating the display effect of a dynamic cover image, according to an exemplary embodiment.
Fig. 4-17 is a flow chart showing a method for acquiring a target cover image, according to an exemplary embodiment.
Fig. 4-18 is a flow chart showing a cover image display method, according to an exemplary embodiment.

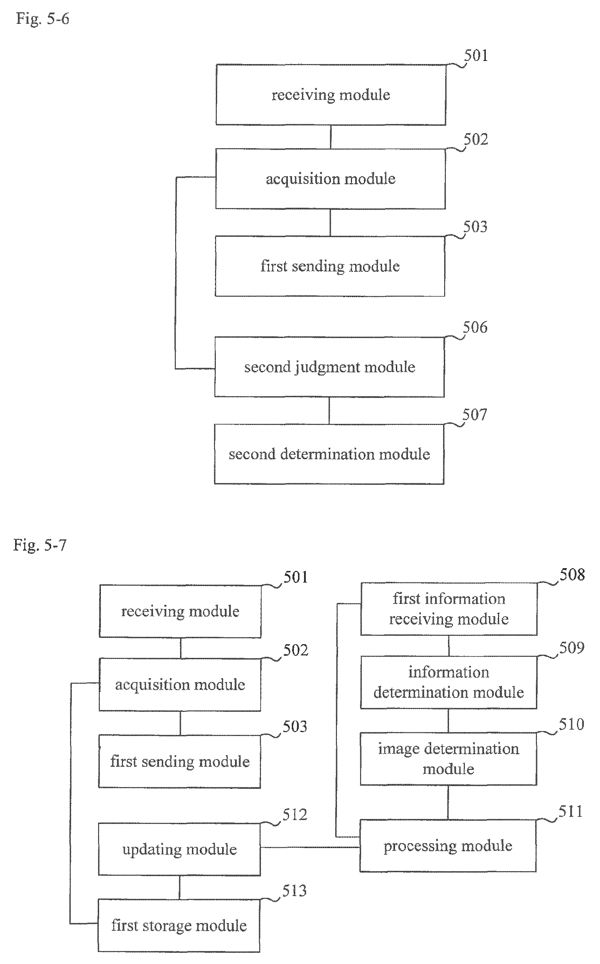

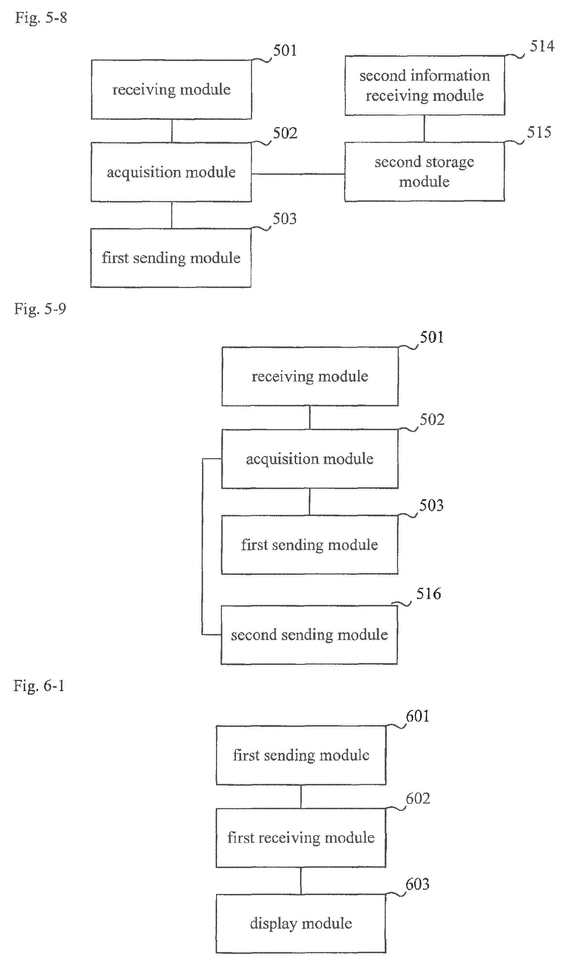

Fig. 5-1 is a block diagram of a device for displaying an audio cover, according to an exemplary embodiment.

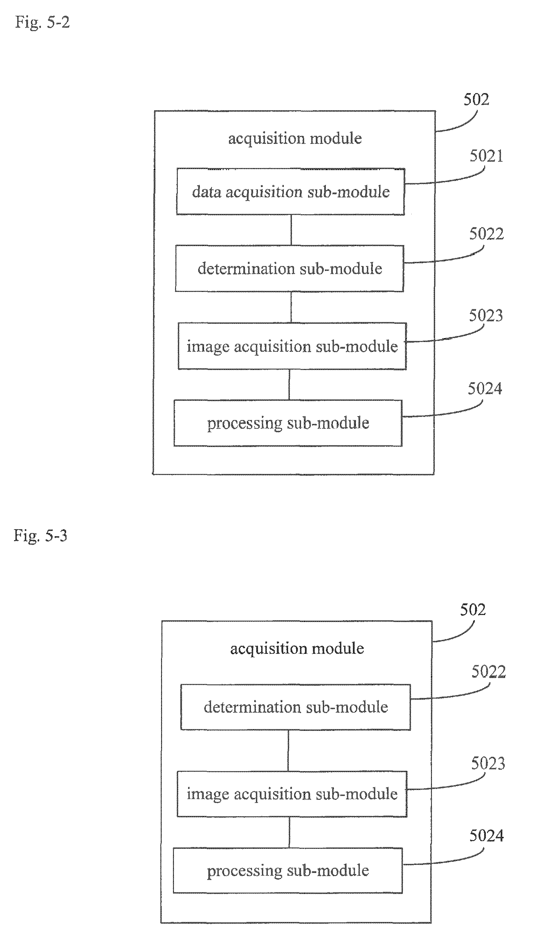

Fig. 5-2 is a block diagram of an acquisition module, according to an exemplary embodiment.
Fig. 5-3 is a block diagram of another acquisition module, according to an exemplary embodiment.

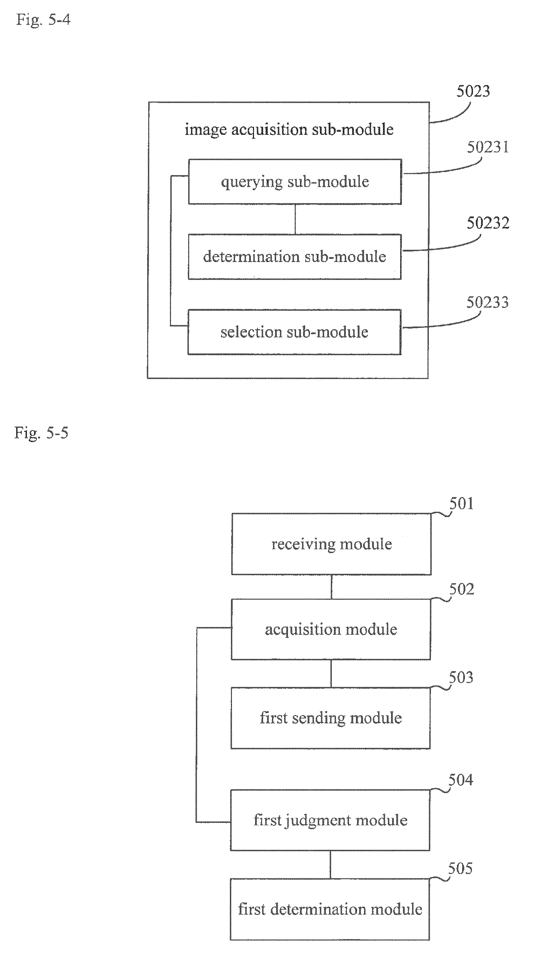

Fig. 5-4 is a block diagram of an image acquisition sub-module, according to an exemplary embodiment.
Fig. 5-5 is a block diagram of another device for displaying an audio cover, according to an exemplary embodiment.
Fig. 5-6 is a block diagram of another device for displaying an audio cover, according to an exemplary embodiment.
Fig. 5-7 is a block diagram of still another device for displaying an audio cover, according to an exemplary embodiment.
Fig. 5-8 is a block diagram of a device for displaying an audio cover, according to another exemplary embodiment.
Fig. 5-9 is a block diagram of a device for displaying an audio cover, according to still another exemplary embodiment.
Fig. 6-1 is a block diagram of another device for displaying an audio cover, according to another exemplary embodiment.

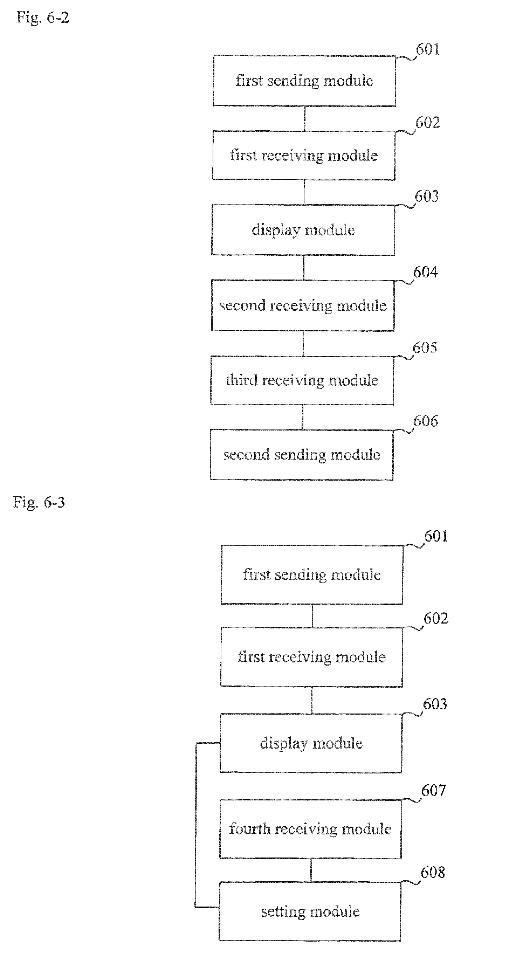

Fig. 6-2 is a block diagram of another device for displaying an audio cover, according to still another exemplary embodiment.
Fig. 6-3 is a block diagram of another device for displaying an audio cover, according to yet another exemplary embodiment.

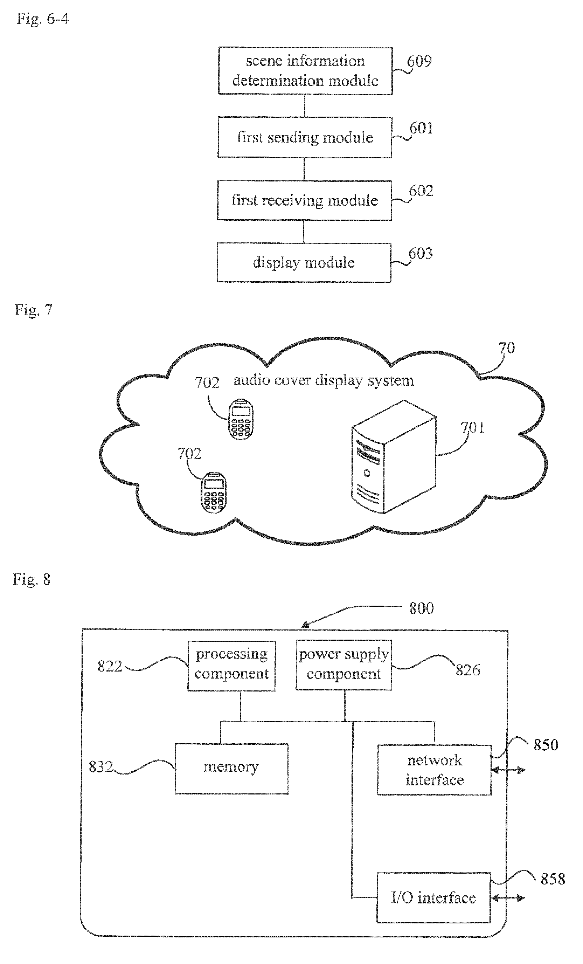

Fig. 6-4 is a block diagram of another device for displaying an audio cover, according to still another exemplary embodiment.
Fig. 7 is a schematic diagram illustrating a system for displaying an audio cover, according to an exemplary embodiment.
Fig. 8 is a block diagram of a device for displaying an audio cover, according to an exemplary embodiment.

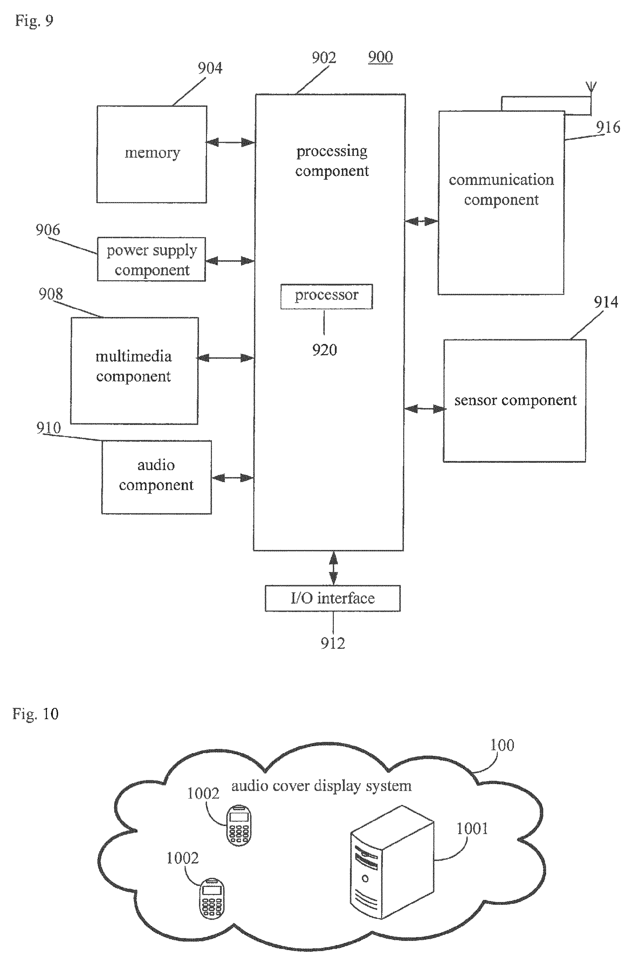

Fig. 9 is a block diagram of a device for displaying an audio cover, according to an exemplary embodiment.
Fig. 10 is a schematic diagram illustrating a system for displaying an audio cover, according to an exemplary embodiment.

The accompanying drawings, which are incorporated in and constitute a part of this specification, illustrate embodiments consistent with the present disclosure and, together with the description, serve to explain the principles of the present disclosure.

### DETAILED DESCRIPTION

In order to make the object, technical solutions and advantages of the embodiments of the present disclosure clearer, the embodiments of the present disclosure will be further described below with reference to the accompanying drawings in detail. Obviously, the described embodiments are not the only embodiments but only some of the possible embodiments of the present disclosure. All the other embodiments implemented by those skilled in the art on the basis of the embodiments in the present disclosure without any inventive skill shall fall within the scope of protection of the embodiments of the present disclosure.

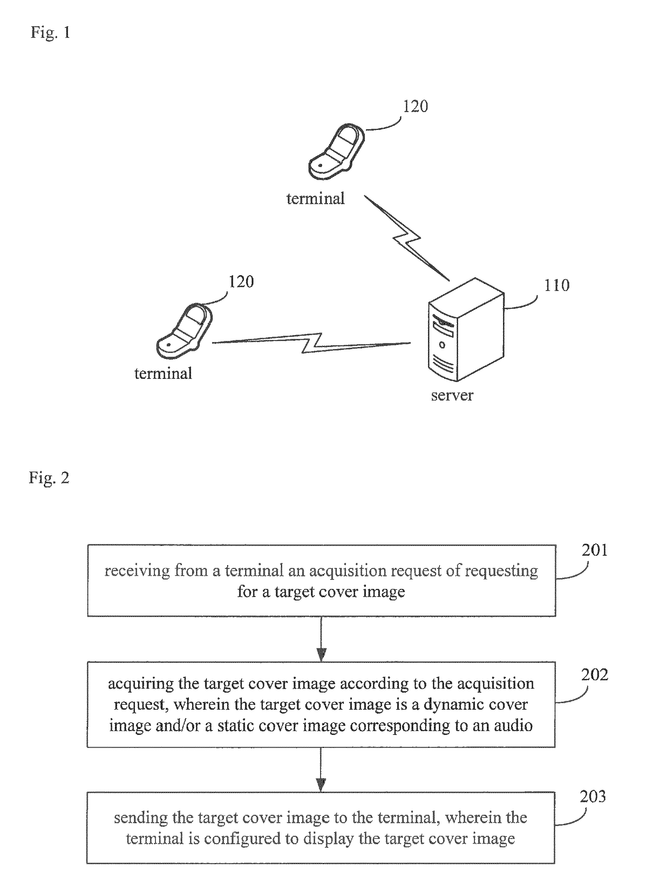

Fig. 1 is a schematic diagram illustrating an implementation environment involved in a method for displaying an audio cover, according to some embodiments of the present disclosure. The implementation environment may include a server 110 and at least one terminal 120.

The server 110 may be a server, or a server cluster consisting of a plurality of servers, or a cloud computing service center. The terminal 120 may be a smart phone, a computer, a multimedia player, an electronic reader, wearable equipment and the like.

A connection may be established between the server 110 and the terminal 120 through a wired network or a wireless network. An audio playing App for playing audio content may be installed in the terminal 120, and the server 110 may provide the audio content and information related to the audio content for the terminal 120.

In the related technology, an audio playing App may be installed in a terminal, multiple audio covers may be displayed on a display interface of the audio playing App installed in the terminal, these audio covers may be pictures such as an album cover, a singer cover and a song menu cover, and these pictures are all static pictures, which are displayed in a fixed form.

Fig. 2 is a flow chart showing a method for displaying an audio cover, according to a schematic embodiment of the present disclosure. The method may be applied to a server 110 shown in Fig. 1, and the method includes:
Step 201: An acquisition request requesting a target cover image is received from a terminal,.
Step 202: The target cover image according to the acquisition request is acquired, wherein the target cover image is a dynamic cover image and/or a static cover image corresponding to audio data.

In the embodiment of the present disclosure, the target cover image being a dynamic cover image and/or a static cover image corresponding to the audio content means that the target cover image is a dynamic cover image corresponding to audio content, or the target cover image is a static cover image corresponding to audio content, or the target cover image is a dynamic cover image and a static cover image which both correspond to the audio content.

Step 203: The target cover image is sent to the terminal, wherein the terminal is configured to display the target cover image.

From the above, according to the audio cover display method provided by the embodiment of the present disclosure, a server acquires a target cover image according to an acquisition request sent by a terminal, and provides the target cover image for the terminal, and the terminal displays the target cover image; since the target cover image is a dynamic cover image and/or a static cover image, display forms of an audio cover are enriched, and the audio cover may be displayed more flexibly.

Optionally, the step of acquiring the target cover image according to the acquisition request includes:
determining target audio data according to the acquisition request;
determining target scene information and a target static image according to the target audio data, wherein the target scene information is for representing a scene characteristic associated with the target audio data;
acquiring an auxiliary dynamic image associated with the target scene information; and adopting the auxiliary dynamic image to process the target static image to obtain the target cover image.

Optionally, the acquisition request includes target scene information, wherein the target scene information is for representing a scene characteristic of an environment where a terminal is located;
the step of acquiring the target cover image according to the acquisition request includes: acquiring a target static image according to the acquisition request;
acquiring an auxiliary dynamic image associated with the target scene information; and adopting the auxiliary dynamic image to process the target static image to obtain the target cover image.

Optionally, the step of acquiring the auxiliary dynamic image associated with the target scene information includes:
querying a preset relationship between scene information and a dynamic image;
if there exists one dynamic image associated with the target scene information in the preset relationship between scene information and a dynamic image , determining the dynamic image associated with the target scene information as the auxiliary dynamic image; and
if there exist at least two dynamic images associated with the target scene information in the preset relationship between scene information and a dynamic image , selecting one dynamic image from the at least two dynamic images associated with the target scene information as the auxiliary dynamic image according to a preset rule.

Optionally, the step of selecting one dynamic image from the at least two dynamic images associated with the target scene information as the auxiliary dynamic image according to a preset rule includes:
randomly selecting one dynamic image from the at least two dynamic images associated with the target scene information as the auxiliary dynamic image;
or, selecting a dynamic image which appears the most times from the at least two dynamic images associated with the target scene information as the auxiliary dynamic image;
or, superposing the at least two dynamic images associated with the target scene information to form the auxiliary dynamic image;
or, providing the at least two dynamic images associated with the target scene information for the terminal, receiving a selection instruction sent by the terminal, wherein the selection instruction is for indicating a dynamic image selected from the at least two dynamic images associated with the target scene information by a user, and determining the dynamic image selected by the user as the auxiliary dynamic image.

Optionally, the target scene information includes at least one of the following: a season, a geographical location, a landmark, weather, mood and time.

Optionally, the step of adopting the auxiliary dynamic image to process the target static image to obtain the target cover image includes:
superposing the auxiliary dynamic image to the target static image to obtain the target cover image;
or, replacing the target static image with the auxiliary dynamic image to obtain the target cover image;
or, combining the auxiliary dynamic image and the target static image to obtain the target cover image.

Optionally, the method further includes:
judging whether the auxiliary dynamic image associated with the target scene information is stored in the server or not; and
if the auxiliary dynamic image is not stored in the server, determining the target static image acquired according to the acquisition request as the target cover image.

Optionally, the step of acquiring the target cover image according to the acquisition request includes:
determining target audio data according to the acquisition request; and
determining a dynamic image which is acquired from a preset dynamic cover database and corresponds to the target audio data as the target cover image, wherein the dynamic cover database is configured to record audio information and each piece of audio information including audio data and a dynamic image.

Optionally, the method further includes:
judging whether the dynamic image corresponding to the target audio data is stored in the dynamic cover database or not; and
if the dynamic image corresponding to the target audio data is not stored in the dynamic cover database, determining the target static image acquired according to the acquisition request as the target cover image.

Optionally, the method further includes:
receiving added audio information, the added audio information including audio data and a static image;
determining scene information according to the audio data, wherein the scene information is for representing a scene characteristic associated with the audio data;
determining an auxiliary dynamic image associated with the scene information;
adopting the auxiliary dynamic image to process the static image to obtain a dynamic image;
adopting the dynamic image to update the added audio information to obtain updated audio information, the updated audio information including the audio data and the dynamic image; and
storing the updated audio information into the preset dynamic cover database, wherein the audio information recorded in the preset dynamic cover database includes the dynamic image.

Optionally, the method further includes:
receiving added audio information, wherein the added audio information includes a dynamic image; and
storing the added audio information into the preset dynamic cover database, wherein the audio information recorded in the preset dynamic cover database includes the dynamic image.

Optionally, the target cover image is obtained by superposing the auxiliary dynamic image to the target static image, and the method further includes:
sending a display parameter to the terminal, wherein the terminal is configured to set a display characteristic of the auxiliary dynamic image according to the display parameter and the display parameter includes at least one of followings: transparency, a resolution and an image position.

Optionally, the target cover image includes any one of a dynamic picture, a video and dynamic display information; the dynamic display information includes a dynamic parameter and a static picture; and the dynamic parameter is for indicating a changing characteristic of the display parameter during display of the static picture.

From the above, according to the audio cover display method provided by the embodiment of the present disclosure, a server acquires a target cover image according to an acquisition request sent by a terminal, and provides the target cover image for the terminal, and the terminal displays the target cover image; since the target cover image is a dynamic cover image and/or a static cover image, the display forms of the audio cover are enriched, and the audio cover may be displayed more flexibly.

Fig. 3 is a flow chart showing a method for displaying an audio cover, according to a schematic embodiment of the present disclosure. The method may be applied to a terminal 120 shown in Fig. 1, and the method includes:
Step 301: when an audio cover is required to be acquired, an acquisition request requesting a target cover image is sent to a server, wherein the server is configured to acquire the target cover image according to the acquisition request and the target cover image is a dynamic cover image and/or a static cover image corresponding to an audio;
Step 302: the target cover image sent by the server is received; and
Step 303: when the audio cover is required to be displayed, the pre-acquired target cover image is displayed.

From the above, according to the audio cover display method provided by the embodiment of the present disclosure, a server acquires a target cover image according to an acquisition request sent by a terminal, and provides the target cover image for the terminal, and the terminal displays the target cover image; since the target cover image is a dynamic cover image and/or a static cover image, display forms of the audio cover are enriched, and the audio cover may be displayed more flexibly.

Optionally, the step of displaying the pre-acquired target cover image includes: displaying the pre-acquired target cover image in an image display area of a cover display interface of the terminal.

Optionally, the method further includes:
receiving at least two dynamic images which are provided by the server and associated with target scene information, wherein the target scene information is for representing a scene characteristic associated with target audio data, or, the target scene information is for representing a scene characteristic of an environment where a terminal is located;
receiving a dynamic image selected from the at least two dynamic images associated with the target scene information by a user; and
sending a selection instruction to the server, wherein the selection instruction including the dynamic image selected by the user and the server is configured to determine the dynamic image selected by the user as an auxiliary dynamic image.

Optionally, the target cover image is obtained by superposing the auxiliary dynamic image to a target static image, and the method further includes:
receiving a display parameter sent by the server; and
setting a display characteristic of the auxiliary dynamic image according to the display parameter, wherein the display parameter includes at least one of the following: transparency, a resolution and an image position.

Optionally, the target cover image includes any one of a dynamic picture, a video and dynamic display information; and the dynamic display information includes a dynamic parameter and a static picture; and the dynamic parameter is for indicating a changing characteristic of the display parameter during display of the static picture;
the step of displaying the pre-acquired target cover image includes:
detecting content of the target cover image; and
if the target cover image includes the dynamic display information, displaying the static picture, and changing the characteristic of the display parameter during display of the static picture according to the dynamic parameter.

Optionally, the acquisition request includes target scene information, wherein the target scene information is for representing a scene characteristic of an environment where a terminal is located; and
the method further includes:
determining the target scene information through an App which is installed in the terminal and associated with the target scene information;
or, displaying scene information prompting options, and receiving target scene information selected in the scene information prompting options by the user;
or, displaying a scene information input box, and receiving target scene information input in the scene information input box by the user;
or, sending an information acquisition request to a function server having a target scene information determination function, and receiving target scene information sent by the function server.

Optionally, the target scene information includes at least one of the following: a season, a geographical location, a landmark, weather, mood and time.

From the above, according to the audio cover display method provided by the embodiment of the present disclosure, a server acquires a target cover image according to an acquisition request sent by a terminal, and provides the target cover image for the terminal, and the terminal displays the target cover image; since the target cover image is a dynamic cover image and/or a static cover image, the display forms of the audio cover are enriched, and the audio cover may be displayed more flexibly.

Fig. 4-1 is a flow chart showing a method for displaying an audio cover, according to a schematic embodiment of the present disclosure. The method may be applied to an implementation environment shown in Fig. 1, and the method includes:
Step 401: when an audio cover is required to be acquired, a terminal sends an acquisition request of requesting for a target cover image to a server.

An audio playing App, such as a music player App, a radio App or a music radio App, may be installed in the terminal, and the audio playing App may be a system App of the terminal, or may also be an App downloaded by the terminal. When a user starts the audio playing App or searches for a related audio through the audio playing App or wants to access a preset App interface (such as a main interface of the App), it is needed to display a cover image, the terminal may send the acquisition request requesting the target cover image to the server, and the server is a background server of the audio playing App.

Exemplarily, the acquisition request may be a song menu cover acquisition request of requesting for a song menu cover image, and the target cover image may correspondingly be a song menu cover image.

Step 402: the server acquires the target cover image according to the acquisition request, wherein the target cover image is a dynamic cover image and/or a static cover image corresponding to audio data.

Step 403: the server sends the target cover image to the terminal.

Step 404: when the audio cover is required to be displayed, displaying the pre-acquired target cover image.

In the embodiment of the present disclosure, the pre-acquired target cover image may be displayed in an image display area of a cover display interface of the terminal, and a display form of another area (such as a text display area or a button display area) of the cover display interface of the terminal is the same as that in the related technology, and will not be limiting of the present disclosure.

Optionally, when the target cover image is a dynamic cover image, the target cover image may include any one of the following: a dynamic picture, a video and dynamic display information, wherein the dynamic display information includes a dynamic parameter and a static picture, wherein the dynamic parameter is for indicating a changing characteristic of a display parameter during display of the static picture; in the embodiment of the present disclosure, the server may pre-establish a relationship between scene information and a dynamic image, wherein the dynamic image may include any one of a dynamic picture, a video and dynamic display information. The dynamic picture may be a Graphics Interchange Format (GIF) picture, and the picture may be a GIF picture obtained by converting a video through image processing software such as PhotoShop (PS), or may also be a GIF picture obtained by connecting a few static pictures frame by frame through image processing software such as PS or Adobe After Effects (AE). The video may be a video in format of avi, wmv, rm, rmvb, 3gp, mpg, mov and the like. The dynamic display information may include a dynamic parameter and a static picture, wherein the dynamic parameter is for indicating the changing characteristic of the display parameter during display of the static picture, and the dynamic parameter may be a continuously changed value of the display parameter, such as a picture resolution, an image position, a scanning frequency of a display or a refreshing rate of the display.

Optionally, in Step 402, there may be multiple methods for the server to acquire the target cover image according to the acquisition request, and the embodiment of the present disclosure is described with the following two as examples.

In the first example, the server may acquire the target cover image according to target scene information determined according to the acquisition request.

Here, the target scene information may include at least one of the following: a season, a geographical location, a landmark, weather, mood and time. Since there are different manners for acquiring target scene information, there may be also multiple manners for the server to acquire a target cover image according to the target scene information determined according to an acquisition request, and in the present disclosure, the description is with reference to the following two as examples.

Fig. 4-2 is a flow chart showing a method for acquiring a target cover image according to an acquisition request, according to a schematic embodiment of the present disclosure. As shown in Fig. 4-2, in the first implementable mode, the method includes:
Step 4021 a: the server determines target audio data according to the acquisition request.

It is to be noted that the acquisition request includes different contents in different application scenes, and the server may acquire corresponding target audio data in different manners according to the contents of the acquisition request. If the audio playing App is a music player App, when a user starts the music player App by a triggering gesture such as a clicking gesture, the music player App is required to display its main interface and to display at least one cover image on the main interface, the terminal sends the acquisition request to the server, then the acquisition request may indicate the music player App to be started, and for example, adopting an identifier of the main interface to indicate the music player App to be started, and the server acquires preset audio data corresponding to the main interface and takes the acquired preset audio data as target audio data according to the acquisition request; the user inputs a key character in a search box when searching for audio content desired to be played through the search box of the audio playing App, the terminal sends the acquisition request to the server, the acquisition request including the key character, and the server searches a corresponding database for at least one set of audio data matched with the key character, and determines the at least one set of audio data as the target audio data; and when the user opens a preset interface (such as "discover music", "greatest song menu" or "my music") of the music player App through the triggering gesture such as the clicking gesture, the music player App is required to display its preset interface and display at least one cover image on the preset interface, the terminal sends the acquisition request to the server, then the acquisition request may indicate the preset interface to be opened, and for example, adopting an identifier of the preset interface to indicate the preset interface to be opened, the server acquires preset audio data corresponding to the identifier of the preset interface and takes the acquired preset audio data as the target audio data according to the acquisition request.

In a practical application, an acquisition process of the target audio data may use known technology, and will not be repeated in the embodiments of the present disclosure.

As an example, when a user opens an interface where "my music" of a music player App is located through a triggering gesture such as a clicking gesture, the music player App is required to display the interface where "my music" is located and display at least one cover image on the interface where "my music" is located, the terminal sends an acquisition request to the server, then the acquisition request adopts an identifier of "my music" to indicate the preset interface to be opened, and the server acquires audio data "classical songs of WANG Fei" corresponding to the identifier of "my music" according to the identifier of "my music".

In a practical application, the acquisition request may further include a username and a password of the user, the server authenticates the user according to the username and the password, and then executes the acquisition process of the target audio data when determining that the user has a corresponding authority, and an authentication process may use known technology, and will not be repeated in the embodiments of the present disclosure.

Step 4022a: the server determines target scene information and a target static image according to the target audio data, wherein the target scene information is for representing a scene characteristic associated with the target audio data.

In one example, the server may determine the target scene information according to the target audio data.

In an embodiment of the present disclosure, the target scene information may be for representing the scene characteristic associated with the target audio data, and the scene characteristic may reflect some characteristics of the target audio data. For example, the target scene information may include at least one of the following: season, a geographical location, a landmark, weather, mood and time. Here, the season may include spring, summer, autumn, winter and the like; the geographical location may include a manually divided region such as Beijing and Shanghai, or a characterized natural region such as sea, lake and grassland; the landmark may include an object such as Pearl of the Orient, ice, snow, the moon and star; the weather may include windy weather, stormy weather, foggy weather, rainy weather and the like; the mood may be happiness, sadness and the like; the time may include early morning, evening and the like. The target scene information is only described by way of example in the embodiments of the present disclosure, and other implementation solutions of the embodiments of the present disclosure shall also fall within the scope of protection of the present disclosure.

In the embodiment of the present disclosure, the target scene information may be determined by analyzing description information of an audio, and for example, since the description information of the audio may include related information such as the name, lyrics and source of the audio, or may be in a text format such as a txt format, a scene characteristic involved in the description information may be determined by text analysis, and the scene characteristic serves as the target scene information; the target scene information may also be determined by analyzing a played content of the audio data, and for example, the mood reflected by the audio data may be determined by analyzing the playing rhythm of the audio data, and the mood reflected by the audio data may be determined to be happiness if the rhythm is faster; and each piece of audio data may be classified in advance according to the abovementioned types of the target scene information, and then the type of the target audio data may be determined as the target scene information, and for example, if the type of a target audio data is a "sad love song", the target scene information may be determined to be "sadness".

Moreover, the target audio data may include at least one audio file, so that there may be multiple methods for determining target scene information according to the target audio data. If the target audio data includes one audio file, a scene characteristic associated with the audio data may serve as target scene information, and the scene characteristic associated with the audio data may be determined according to description information of the audio data; and if the target audio data includes at least two audio files, a scene characteristic associated with the at least two audio files may be determined according to a preset rule, and the scene characteristic associated with the at least two audio files serve as the target scene information. As an example, the preset rule may be randomly selecting one audio file from the at least two audio files and determining a scene characteristic associated with the selected audio file as the scene characteristic associated with the at least two audio files; the preset rule may also be determining scene characteristics associated with each audio file in the at least two audio files and determining the scene characteristic which appears the most times in the scene characteristics associated with the at least two audio files as the target scene information; the preset rule may also be determining preset scene information which describes the at least two audio files as the target scene information, and the scene information which describes the at least two audio files may be determined by overall description information of the at least two audio files; and the preset rule may also be sequencing the at least two audio files according to a preset sequencing rule, selecting the audio file (such as the first audio file) at a preset position from the sequenced audio files and determining the scene characteristic associated with the selected audio file as the scene characteristic associated with the at least two audio files.

As an example, it is supposed that the audio data determined according to the acquisition request is "classical songs of Wang Fei", and if the audio data includes one audio file such as "That year a hurry", the scene information may be determined to include: "winter", "ice" and "spring" according to description information such as lyrics of "That year a hurry"; if the audio data includes at least two audio files such as "That year a hurry", "Love Peas" and "Fleeting Time", then the scene information may be determined according to overall description information of the at least two audios; and if the overall description information is: classical songs of Wang Fei, capable of causing the heart to beat faster and being as quiet as lakes and as blue as the sky sometimes, the scene information may be determined to include lake by text analysis.

In another example, the server may determine a target static image according to target audio data.

In a practical application, the server may establish a static cover database configured to store audio related information, and every time when added audio information is acquired, the added audio information may include audio data and a static image, the static image may be determined as an audio cover corresponding to the audio data using known technology, and such a display manner is fixed. In the embodiments of the present disclosure, the server may process the static image in the static cover database.

As an example, each piece of audio information stored in the static cover database may, as shown in Table 1, include audio data and a static image, the audio data may include description information of an audio file, playing data of the audio file and the like, wherein the description information of the audio file may include related information such as the name, lyrics and source of the audio file, and may be in a text format such as the text format, and the playing data of the audio file may be an actual audio file, and may be in an audio format such as WAV and MP3. The playing data of the audio file may include at least one audio file, and may usually be a set of multiple audio files, and if the playing data of the audio file is a set of multiple audio files, the description information of the audio file may be overall description information of the set of the multiple audio files, or may also be description information of each audio file, which will not be repeated in the embodiments of the present disclosure. The static image is usually a preset static picture.

As an example, the audio information stored in the static cover database is song menu information, then each piece of audio information may include song menu data and a static image, and the song menu data may include description information of a song menu, playing data of the song menu and the like, wherein the description information of the song menu may include related information such as name, representative songs and source of the song menu, and the playing data of the song menu includes audio content of each song in the song menu, and is a set of multiple audio files. As an example, the description information of the song menu may be "one singer one signature song", " it is sunny on Valentine's day, it rains suddenly..." and the source "xx music", wherein "xx music" is a server name corresponding to the audio playing App which provides "one singer one signature song". Each piece of audio information may be provided with a unique identifier which facilitates searching for the audio information, each static image may also be provided with a unique identifier which facilitates searching for the static image, and the unique identifiers of the static images are not marked in Table 1. Exemplarily, as shown in Table 1, audio data included in audio information with an identifier 100 is an audio set "classical songs of Wang Fei", and a static image is the head portrait of Wang Fei.

**Table 1**

| Audio information | | Identifier |
|---|---|---|
| Audio data | Static image | |
| Audio set "classical songs of Wang Fei" | Head portrait of Wang Fei | 100 |
| Audio set "classical songs of Xie Tingfeng" | Head portrait of Xie Tingfeng | 101 |
| Audio set "slow songs" | Static picture of slow songs | 102 |
| Audio set "one singer one signature song" | Static picture of sea | 103 |
| Audio set "old love songs" | Static picture of flowers | 104 |

In the embodiment of the present disclosure, the corresponding target audio data may be acquired from the static cover database according to the acquisition request, then the static image associated with the target audio data may be acquired according to the target audio data, and when the server stores the target audio data in the static cover database in the form of the audio information shown in Table 1, the static image which is in the same audio information as the target audio data may be determined as the target static image. In a practical application, there may also be multiple methods for acquiring the target static image. For example, a static image database may be set, audio related pictures which are randomly acquired from a network is stored in the static image database, a static image may be acquired from the static image database according to the acquisition request, a corresponding relationship between the audio data and the static image may also be established, then the audio data and the static image are stored respectively, and after the target audio data is determined, the corresponding relationship between the audio data and the static image is queried to obtain the target static image corresponding to the target audio data. Only examples are described in the embodiment of the present disclosure, and other implementation modes may also be covered by the scope of protection of the present disclosure.

Step 4023a: the server acquires an auxiliary dynamic image associated with the target scene information.

Fig. 4-3 is a flow chart showing a method for acquiring an auxiliary dynamic image associated with target scene information, according to a schematic embodiment of the present disclosure. The method includes:
Step 4023a1: the server queries a preset relationship between scene information and a dynamic image.

In the embodiment of the present disclosure, the server may pre-establish the relationship between scene information and a dynamic image, wherein the dynamic image may include any one of a dynamic picture, a video and dynamic display information. The dynamic picture may be a GIF picture, and the picture may be a GIF picture obtained by converting a video through image processing software such as PS, or may also be a GIF picture obtained by connecting a few static pictures frame by frame through image processing software such as PS or AE. The video may be a video in format of avi, wmv, rm, rmvb, 3gp, mpg, mov and the like. The dynamic display information may include a dynamic parameter and a static picture, and the dynamic parameter is for indicating the changing characteristic of the display parameter during display of the static picture, and the dynamic parameter may be a continuously changed value of the display parameter, such as a picture resolution, an image position, the scanning frequency of the display or the refreshing rate of the display. By regulating the display parameter of the static picture according to the dynamic parameter, a dynamic display effect may be achieved when the static picture is displayed, and a dynamic image may be represented to the user.

In an example, it is supposed that the dynamic parameter is a continuously changed value of the image position, and two images, i.e. grass and cloud, appear in the static picture, and the dynamic parameter indicates that a position of the grass continuously changes on the display interface of the terminal along a grid line scanning direction and that a position of the cloud continuously changes on the display interface of the terminal along a direction opposite to the grid line scanning direction. Fig. 4-4 is a display image showing continuous change of a static picture, according to a schematic embodiment of the present disclosure. As shown in Fig. 4-4, display images of the same static picture at three continuous adjacent time points are employed as an example, a display time interval between every two display images is a preset time length, the preset time length may, as an example, be 0.2 seconds, and the dynamic display effect may be achieved by rapidly and periodically displaying the three display images on the display interface of the terminal. The grid line scanning direction is the left-to-right direction x in Fig. 4-4.

It is to be noted that adopting the dynamic display information to display the audio cover is just one method for dynamically displaying a static image, there are many methods in a practical application, and as an example, the server may indicate the terminal to display the audio cover by adopting an animation technology in the embodiment of the present disclosure. The animation technology refers to a technology of moving a picture or a part of the picture displayed on the display interface according to a certain rule or requirement.

There are usually three ways of providing movement on the display interface, i.e. keeping the position unchanged and changing the form, keeping the form unchanged and changing the position, and changing both the position and the form. For example, in the animation technology, a series of images in continuous actions may be stored in a memory to implement rapid transformation of the images by virtue of a picture object array, the picture object array may be provided for the terminal by the server, and a practical process may refer to the related technology, and will not be repeated in the embodiments of the present disclosure.

As an example, the relationship between scene information and a dynamic image in the embodiment of the present disclosure may be shown in Table 2. One dynamic image may correspond to one piece of scene information, and for example, "Green grass sways" may correspond to "spring"; and one dynamic image may also correspond to multiple pieces of scene information, and for example, "snow dances" may corresponding to "winter", "ice" and "snow" respectively. Each dynamic image may be correspondingly provided with a unique identifier which facilities searching, and for example, an identifier of the dynamic image "green grass sways" is 00.

**Table 2**

| Scene information | Dynamic image | Identifier |
|---|---|---|
| Spring | Green grass sways | 00 |
| Summer | Petals fall down | 01 |
| Autumn | Maple leaves fall down | 02 |
| Winter | Snow dances | 03 |
| Ice | Snow dances | 03 |
| Snow | Snow dances | 03 |
| Morning | Misty | 04 |

Step 4023a2: if there exists one dynamic image associated with the target scene information in the preset relationship between scene information and a dynamic image, the server determines the dynamic image associated with the target scene information as the auxiliary dynamic image.

As an example, if the scene information is "spring", there exists a dynamic image "green grass sways" associated with "spring" according to the preset relationship, shown in Table 2, between scene information and a dynamic image, and "green grass sways" is determined as an auxiliary dynamic image.

Step 4023a3: if there exist at least two dynamic images associated with the target scene information in the preset relationship between scene information and a dynamic image, the server selects one dynamic image from the at least two dynamic images associated with the target scene information as the auxiliary dynamic image according to a preset rule.

In the embodiment of the present disclosure, there may be multiple preset rules, and as an example, the step that the server selects one dynamic image from the at least two dynamic images associated with the target scene information as the auxiliary dynamic image according to the preset rule may include: randomly selecting one dynamic image from the at least two dynamic images associated with the target scene information as the auxiliary dynamic image; or, selecting the dynamic image which appears the most times from the at least two dynamic images associated with the target scene information as the auxiliary dynamic image; or, superposing the at least two dynamic images associated with the target scene information to form the auxiliary dynamic image; or, selecting the auxiliary dynamic image from the at least two dynamic images associated with the target scene information by the user.

As an example, if the target audio data determined according to the acquisition request is "classical songs of Wang Fei", and if according to Table 2, the determined scene information is "winter", "ice" and "spring" respectively and dynamic images associated with the scene information are "snow dances", "snow dances" and "green grass sways" respectively, then there exist at least two dynamic images associated with the scene information, and one dynamic image associated with the scene information may be selected from the at least two dynamic images associated with the scene information as the auxiliary dynamic image according to the preset rule. For example, the preset rule may be randomly selecting one dynamic image associated with the scene information, so that one target dynamic image may be randomly selected from both "snow dances" and "snow dances" and "green grass sways" as the auxiliary dynamic image; and for another example, the preset rule may be selecting the dynamic image which appears the most times and is associated with the target scene information, "snow dances" appears twice and "green grass sways" appears once, so that "snow dances" may be selected from "snow dances" as well as "snow dances" and "green grass sways" as the auxiliary dynamic image.

As an example, Fig. 4-5 is a flow chart showing a method for selecting an auxiliary dynamic image by a user, according to an exemplary embodiment. As shown in Fig. 4-5, the method includes:
Step 001: the server provides the at least two dynamic images associated with the target scene information for the terminal.

As an example, if the acquisition request contains an audio identifier and the audio identifier in the acquisition request is the name "That year a hurry" of the audio, then as shown in Table 2, it can be seen that the scene information is "winter", "ice" and "spring" respectively and the dynamic images associated with the scene information are "snow dances" as well as "snow dances" and "green grass sways" respectively according to the lyrics "embrace each other for winter sleep, but not become immortal", "do not blame cold weather making tears into ice" and "spring breeze cannot recover old times", so that there exist at least two dynamic images associated with the scene information, and one dynamic image may be selected from the at least two dynamic images associated with the scene information as the auxiliary dynamic image according to the preset rule. The server may provide the two dynamic images "snow dances" and "green grass sways" for the terminal.

Step 002: the terminal displays the at least two dynamic images associated with the target scene information.

Exemplarily, the two dynamic images "snow dances" and "green grass swings" may be displayed.

Step 003: the terminal receives the dynamic image selected from the at least two dynamic images associated with the target scene information by the user.

If the user selects the dynamic image "green grass sways" from the two dynamic images "snow dances" and "green grass sways", the terminal correspondingly receives selected information of the user.

Step 004: the terminal sends a selection instruction to the server, the selection instruction including the dynamic image selected by the user.

As an example, the terminal may send the selection instruction to the server, the selection instruction including the dynamic image "green grass sways" selected by the user.

Step 005: the server determines the dynamic image selected by the user as the auxiliary dynamic image.

As an example, the server may determine the dynamic image "green grass sways" selected by the user as the auxiliary dynamic image.

Step 4024a: the server adopts the auxiliary dynamic image to process the target static image to obtain the target cover image.

Fig. 4-6 is a schematic diagram illustrating a method for adopting an auxiliary dynamic image to process a target static image to obtain a target cover image, according to a schematic embodiment of the present disclosure. As shown in Fig. 4-6, the auxiliary dynamic image may be superposed to the target static image to obtain the target cover image. As an example, it is supposed that the auxiliary dynamic image is a dynamic picture N, the dynamic picture N displaying the dynamic image "snow dances", the target static image is a static picture M, the static picture M being the head portrait of Wang Fei, N is superposed to M to obtain a dynamic picture P1, the dynamic picture P1 displays a scene where snow dances on the head portrait of Wang Fei, and the dynamic picture P1 is determined as the target cover image.

Fig. 4-7 is a schematic diagram illustrating a method for adopting an auxiliary dynamic image to process a target static image to obtain a target cover image, according to another schematic embodiment of the present disclosure. As shown in Fig. 4-7, the target static image is replaced with the auxiliary dynamic image to obtain the target cover image. As an example, it is supposed that the auxiliary dynamic image is the dynamic picture N, the dynamic picture N displaying the dynamic image "snow dances", the target static image is the static picture M, the static picture M being the head portrait of Wang Fei, M may be completely covered by N to obtain a dynamic picture P2, M may also be replaced with N to obtain the dynamic picture P2, the dynamic picture P2 displays the scene "snow dances" to achieve a display effect the same as that of the dynamic picture N, and the dynamic picture P2 is determined as the target cover image.

Fig. 4-8 is a schematic diagram illustrating a method for adopting an auxiliary dynamic image to process a target static image to obtain a target cover image, according to another schematic embodiment of the present disclosure. As shown in Fig. 4-8, the auxiliary dynamic image and the target static image are combined to obtain the target cover image.

As an example, it is supposed that the auxiliary dynamic image is the dynamic picture N, the dynamic picture N displaying the dynamic image "snow dances", the target static image is the static picture M, the static picture M being the head portrait of Wang Fei, N may be combined with M to obtain a dynamic picture P3, for example, N is arranged above M to obtain the dynamic picture P3, the dynamic picture P3 simultaneously displays the head portrait of Wang Fei and the scene "snow dances", and the dynamic picture P3 is determined as the target cover image.

From the above, in the embodiment of the present disclosure, the target static image is processed to obtain the target cover image through the auxiliary dynamic image, and the auxiliary dynamic image is determined through the target scene information representing the scene characteristic associated with the target audio data, so that the finally obtained target cover image may reflect the scene characteristic associated with the target audio data, display forms of the audio cover are enriched, the display becomes more interesting, and a user prompting function of the audio cover is additionally realized. Furthermore, the target lock screen interface may also include a dynamic scene such as raindrops, falling down of petals, snowing and light flickering, so that the audio cover may be better displayed based on scenarios.

In the second implementable mode, the acquisition request includes target scene information, the target scene information may be for representing a scene characteristic of an environment where a terminal is located, and the target scene information may include at least one of the following: season, a geographical location, a landmark, weather, mood and time. The target scene information is acquired by the terminal and added into the acquisition request.

As an example, the terminal may determine target scene information through an App which is installed in the terminal and associated with the target scene information, and as an example, the season and the time may be determined through a timing module or a timing App installed in the terminal, and the weather may be determined through a weather App installed in the terminal; or, the terminal displays scene information prompting options and receives the target scene information selected in the scene information prompting options by the user; as an example, the terminal displays the scene information prompting options, i.e. a season prompting option, a geographical location prompting option, a landmark prompting option, a weather prompting option, a mood prompting option and a time prompting option, respectively, the terminal displays sub-options of the mood prompting option, such as sub-options of happiness, sadness, depression and ecstasy, after receiving a mood prompting option triggering instruction from the user if the user selects the mood prompting option, and the terminal determines "happiness" as the target scene information after receiving a happiness sub-option triggering instruction from the user if the user selects the happiness sub-option in the sub-options; or, the terminal displays a scene information input box, and receives target scene information input in the scene information input box by the user; as an example, the terminal determines "happiness" as the target scene information if the terminal receives a character "happiness" input in the displayed information input box by the user; or, the terminal sends an information acquisition request to a function server having a target scene information determination function, and receives the target scene information sent by the function server, the function server may be the same as or different from the server 110 shown in Fig. 1, and exemplarily, the terminal may send an information acquisition request for acquiring a geographical location to a server with a positioning function, such as a positioning server, and the positioning server locates the terminal and sends the determined geographical location to the terminal as the target scene information.

Furthermore, the geographical location and the landmark may be determined through a map App installed in the terminal, or may also be determined by taking a picture by the terminal through a camera and analyzing the picture. Only schematic description is made in the embodiment of the present disclosure, and other apparent implementation solutions may also be covered by the scope of protection of the embodiments of the present disclosure, and will not be repeated in the embodiment of the present disclosure.

Fig. 4-9 is a schematic diagram illustrating a method for acquiring a target cover image according to an acquisition request, according to another schematic embodiment of the present disclosure. As shown in Fig. 4-9, the method includes:
Step 4021b: the server acquires a target static image according to an acquisition request.

In a practical application, the server may establish a static cover database configured to store audio related information, and every time when added audio information is acquired, the added audio information may include audio data and a static image, the static image may be determined as an audio cover corresponding to the audio data in the related technology, and such a display manner is fixed.

In the embodiment of the present disclosure, the corresponding target audio data may be acquired from the static cover database according to the acquisition request, such an acquisition process may refer to Step 4021a, then the static image associated with the target audio data is acquired according to the target audio data, and when the server stores the target audio data into the static cover database in form of the audio information shown in Table 1, the static image which is in the same audio information as the target audio data may be determined as the target static image. As an example, the target audio data "classical songs of Wang Fei" may be acquired according to the acquisition request, and the target static image acquired according to the target audio data "classical songs of Wang Fei" may be the head portrait of Wang Fei.

Step 4022b: the server acquires an auxiliary dynamic image associated with the target scene information.

Fig. 4-10 is a flow chart showing a method for acquiring an auxiliary dynamic image associated with target scene information, according to a schematic embodiment of the present disclosure. The method includes:
Step 4022b 1: the server queries a preset relationship between scene information and a dynamic image.

In the embodiment of the present disclosure, a process of querying the preset relationship between scene information and a dynamic image by the server may refer to Step 4023a1 in the abovementioned embodiment.

Step 4022b2: if there exists one dynamic image associated with the target scene information in the preset relationship between scene information and a dynamic image, the server determines the dynamic image associated with the target scene information as an auxiliary dynamic image.

As an example, if the scene information is "spring", then there exists a dynamic image "green grass sways" associated with "spring" according to the preset relationship, shown in Table 2, between scene information and a dynamic image, and "green grass sways" is determined as the auxiliary dynamic image.

Step 4022b3: if there exist at least two dynamic images associated with the target scene information in the preset relationship between scene information and a dynamic image, the server selects one dynamic image from the at least two dynamic images associated with the target scene information as the auxiliary dynamic image according to a preset rule.

As an example, the target scene information in the acquisition request is "spring" and "morning", and according to Table 2, it can be seen that the dynamic images associated with the scene information are "green grass sways" and "misty" respectively, so that there exist at least two dynamic images associated with the scene information, and one dynamic image associated with the scene information may be selected from the at least two dynamic images associated with the scene information as the auxiliary dynamic image according to the preset rule. For example, the preset rule may be randomly selecting one dynamic image associated with the scene information, so that one target dynamic image may be randomly selected from "green grass sways" and "misty" as the auxiliary dynamic image; and for another example, the preset rule may be superposing the dynamic images associated with the target scene information to form an auxiliary dynamic image, so that "green grass sways" and "misty" may be superposed to form the auxiliary dynamic image.

A process of selecting one dynamic image from the at least two dynamic images associated with the scene information as the auxiliary dynamic image according to the preset rule by the server may refer to Step 4023a3, and may also refer to Steps 001 to 005 shown in Fig. 4-5, which will not be repeated in the present disclosure.

Step 4023b: the server adopts the auxiliary dynamic image to process the target static image to obtain the target cover image.

A process of adopting the auxiliary dynamic image to process the target static image to obtain the target cover image in the embodiment of the present disclosure may refer to the processes of Step 4024a shown in Fig. 4-6, Fig. 4-7 or Fig. 4-8, that is, the auxiliary dynamic image is superposed to the target static image to obtain the target cover image; or, the target static image is replaced with the auxiliary dynamic image to obtain the target cover image; or, the auxiliary dynamic image is combined with the target static image to obtain the target cover image. The process will not be repeated in the embodiment of the present disclosure.

It is to be noted that the sequence of the steps of the method for acquiring a target cover image according to an acquisition request as shown in Fig. 4-9 may be regulated, Step 4021b may, for example, be executed after Step 4022b; there are no limits made in the embodiments of the present disclosure.

It is to be noted that the server may also judge whether the auxiliary dynamic image associated with the target scene information is stored in the server or not and then execute the process of acquiring a target cover image according to a judgment result, as shown in Fig. 4-11. Fig. 4-11 is a flow chart showing a method for acquiring a target cover image, according to an exemplary embodiment.

Step 011: the server judges whether the auxiliary dynamic image associated with the target scene information is stored in the server or not, Step 012 is executed if the auxiliary dynamic image is stored in the server, and Step 013 is executed if the auxiliary dynamic image is not stored in the server.

Step 012: the server acquires the auxiliary dynamic image associated with the target scene information.

Step 012 may be Step 4023a or Step 4022b, and a specific process may refer to Step 4023a or Step 4022b. The server may execute a subsequent step such as Step 4024a or Step 4023b after acquiring the auxiliary dynamic image associated with the target scene information.

Step 013: the server determines the target static image acquired according to the target audio data as the target cover image.

If the auxiliary dynamic image is not stored in the server, the server cannot process the target static image, and may directly determine the target static image as the target cover image. A process of acquiring the target static image according to the target audio data by the server may refer to the related technology, and will not be repeated in the embodiments of the present disclosure.

From the above, in the embodiment of the present disclosure, the auxiliary dynamic image is adopted to process the target static image to obtain the target cover image, and the auxiliary dynamic image is determined according to the target scene information which represents the scene characteristic of the environment where the terminal is located, so that the finally obtained target cover image may reflect the scene characteristic of the environment where the terminal is located, the display forms of the audio cover are enriched, the display is more interesting, and the user prompting function of the audio cover is additionally realized. As an example, if the target scene information includes season and the indicated season is winter, the dynamic image "snow dances" may be displayed on the target cover image; if the target scene information includes weather and the indicated weather is heavy rain, the dynamic image "rain pours down" may be displayed on the target cover image; if the target scene information includes a landmark and the indicated landmark is a cup of coffee, "steaming coffee" may be displayed on the target cover image; and if the target scene information includes a geographical location and the geographical location is sea, "waving seawater" may be displayed on the target cover image.

On the second aspect, the server may acquire a target cover image by querying the preset cover database according to an acquisition request.

Fig. 4-12 is a flow chart showing a method for acquiring a target cover image according to an acquisition request, according to another schematic embodiment of the present disclosure. As shown in Fig. 4-12, the method includes:
Step 4021 c: the server establishes a dynamic cover database.

In the embodiment of the present disclosure, the cover database may include a dynamic cover database, and may also include a static cover database, wherein any cover database is configured to store audio information, each piece of audio information may include audio data and an audio cover, the audio covers stored in the dynamic cover database may be dynamic images, and the audio covers stored in the static cover database may be static images. The audio data may include description information of audio content, playing data of the audio content and the like, wherein the description information of the audio content may include related information such as the name, lyrics and source of the audio content, and may be in a text format such as the text format, and the playing data of the audio content may be an actual audio file and may be in an audio format such as WAV and MP3. The playing data of the audio content may include at least one audio file, and may usually be a set of multiple audio files, and if the playing data of the audio file is a set of multiple audio files, the description information of the audio file may be overall description information of the set of the multiple audio files, or may also be description information of each audio file, which will not be repeated in the present disclosure. The static image is usually a preset static picture. Exemplarily, the audio information stored in the static cover database is song menu information, then each piece of audio information may include song menu data and a static image, and the song menu data may include description information of a song menu, playing data of the song menu and the like, wherein the description information of the song menu may include related information such as the name, representative songs and source of the song menu, and the playing data of the song menu includes an audio file of each song in the song menu, and is a set of multiple audio files. As an example, the description information of the song menu may be "one singer one signature song", "it is sunny on Valentine's day, it rains suddenly..." and the source "xx music", wherein "xx music" is a server name corresponding to the audio playing App which provides "one singer one signature song". Exemplarily, the audio data corresponding to the audio information with the identifier 100 may include description information of "classical songs of Wang Fei", playing data of "classical songs of Wang Fei" and the like, the description information may be: "classical songs of Wang Fei, capable of causing heart-felt emotions and being as quiet as lakes and as blue as the sky sometimes" and the source xx music", wherein "xx music" is the server name corresponding to the audio playing App which provides the target audio data "classical songs of Wang Fei".

Step 4022c: the server updates the dynamic cover database.

When the server receives new audio information, it is necessary to update the dynamic cover database, wherein there may be multiple ways for the server to update the dynamic cover database, and the following two will be taken as examples for description in the embodiments of the present disclosure.

Fig. 4-13 is a flow chart showing a method for updating a dynamic cover database, according to a schematic embodiment of the present disclosure. As shown in Fig. 4-13, in the first implementable mode, the method includes:
Step 4022c1: the server receives added audio information, the added audio information including audio data and a static image.

As an example, each piece of audio information stored in the cover database may, as shown in Table 3, include audio data and a dynamic image, and the dynamic image is obtained by processing according to the preset static image. Each piece of audio information may be provided with a unique identifier which facilitates searching for the audio information, each dynamic image may also be provided with a unique identifier which facilitates searching for the dynamic image, and the unique identifiers of the dynamic images are not marked in Table 3. As an example, as shown in Table 3, audio data included in audio information with an identifier 101 is an audio set "classical songs of Xie Tingfeng", and a dynamic image is the head portrait of Xie Tingfeng.

**Table 3**

| Audio information | | Identifier |
|---|---|---|
| Audio data | Dynamic image | |
| Audio set "classical songs of Xie Tingfeng" | Head portrait of Xie Tingfeng | 101 |
| Audio set "slow songs" | Static picture of slow songs | 102 |
| Audio set "one singer one signature song" | Static picture of sea | 103 |
| Audio set "old love songs" | Static picture of flowers | 104 |

The added audio information may be uploaded to the server by a server manager through a background terminal such as a computer, or may also be input into the server by a server manager through an input module (such as an Input/Output (I/O) interface) of the server. The added audio information may include audio data and a static image, the server may store the audio information into the dynamic cover database, then is required to process the static image to obtain a dynamic image, and finally updates the dynamic cover database with the dynamic image; and the server may also store the audio information into the static cover database, then is required to process the static image to obtain the dynamic image, and finally stores the added audio information where the dynamic image is located into the dynamic cover database. As an example, if an identifier of the added audio information is 100, the added audio information may include audio data: audio set "classical songs of Wang Fei" and a static image: the head portrait of Wang Fei. The server may also process the static image to obtain the dynamic image and then store the audio information including the audio data and the dynamic image into the database.

Step 4022c2: the server determines scene information according to the audio data, and the scene information is for representing a scene characteristic associated with the audio data.

In the embodiment of the present disclosure, the scene information is for representing the scene characteristic associated with the added audio data, and the scene characteristic may reflect some characteristics of the target audio data. For example, the scene information may include at least one of the following: season, a geographical location, a landmark, weather, mood and time. Here, the season may include spring, summer, autumn, winter and the like; the geographical location may include a manually divided region such as Beijing and Shanghai, or a characterized natural region such as sea, lake and grassland; the landmark may include an object such as Pearl of the Orient, ice, snow, the moon and star; the weather may include windy weather, stormy weather, foggy weather, rainy weather and the like; the mood may be happiness, sadness and the like; the time may include early morning, evening and the like. The scene information is only described as examples in the embodiments of the present disclosure, and other implementation solutions of the embodiments of the present disclosure shall also fall within the scope of protection of the embodiments of the present disclosure.

Step 4022c3: the server determines an auxiliary dynamic image associated with the scene information.

In the embodiment of the present disclosure, a process of determining the auxiliary dynamic image associated with the scene information by the server may refer to the process of Step 4023a shown in Fig. 4-3 in the abovementioned embodiment, and will not be repeated in the embodiment of the present disclosure.

Step 4022c4: the server adopts the auxiliary dynamic image to process the static image to obtain a dynamic image.

In the embodiment of the present disclosure, an auxiliary dynamic image may be superposed to a static image to obtain a dynamic image in one example; in another example, the static image may be replaced with the auxiliary dynamic image to obtain the dynamic image; and in a third example, the target static image may be processed by adopting the auxiliary dynamic image to obtain the dynamic image.

Fig. 4-6 is a schematic diagram illustrating a method for processing a static image to obtain a dynamic image by adopting an auxiliary dynamic image, according to a schematic embodiment of the present disclosure. As shown in Fig. 4-6, an auxiliary dynamic image may be superposed to a static image to obtain a dynamic image. As an example, it is supposed that the auxiliary dynamic image is a dynamic picture N, the dynamic picture N displaying the dynamic image "snow dances", the static image is a static picture M, the static picture M being the head portrait of Wang Fei, N is superposed to M to obtain a dynamic picture P1, the dynamic picture P1 displays a scene where snow dances on the head portrait of Wang Fei, and the dynamic picture P1 is determined as the dynamic image.

Fig. 4-7 is a schematic diagram illustrating a method for processing a static image to obtain a dynamic image by adopting an auxiliary dynamic image, according to another schematic embodiment of the present disclosure. As shown in Fig. 4-7, a static image is replaced with an auxiliary dynamic image to obtain a dynamic image. Exemplarily, it is supposed that the auxiliary dynamic image is a dynamic picture N, the dynamic picture N displaying the dynamic image "snow dances", the target static image is a static picture M, the static picture M being the head portrait of Wang Fei, M may be completely covered by N to obtain a dynamic picture P2, M may also be replaced with N to obtain the dynamic picture P2, the dynamic picture P2 displays the scene "snow dances" to achieve a display effect the same as that of the dynamic picture N, and the dynamic picture P2 is determined as the target cover image.

Fig. 4-8 is a schematic diagram illustrating a method for adopting an auxiliary dynamic image to process a target static image to obtain a target cover image, according to another schematic embodiment of the present disclosure. As shown in Fig. 4-8, an auxiliary dynamic image and a target static image are combined to obtain a dynamic image. As an example, it is supposed that the auxiliary dynamic image is a dynamic picture N, the dynamic picture N displaying the dynamic image "snow dances", the target static image is a static picture M, the static picture M being the head portrait of Wang Fei, N may be combined with M to obtain a dynamic picture P3, for example, N is arranged above M to obtain a dynamic picture P3, the dynamic picture P3 simultaneously displays the head portrait of Wang Fei and the scene "snow dances", and the dynamic picture P3 is determined as the target cover image.

Step 4022c5: the server adopts the dynamic image to update the added audio information to obtain updated audio information, the updated audio information including the audio data and the dynamic image.

As an example, if the dynamic image represents the scene where "snow dances" on the head portrait of Wang Fei, the head portrait of Wang Fei in the added audio information is updated by adopting the dynamic image to obtain updated audio information, and the updated audio information includes the dynamic image.

Step 4022c6: the server stores the updated audio information into the preset dynamic cover database, wherein the audio information recorded in the preset dynamic cover database includes the dynamic image.

As an example, the cover database in which the updated audio information is stored may be shown in Table 4, an identifier of the added audio information is 100, and the added audio information may include audio data: audio set "classical songs of Wang Fei" and a dynamic image: snow dances on the head portrait of Wang Fei.

**Table 4**

| Audio information | | Identifier |
|---|---|---|
| Audio data | Dynamic image | |
| Audio set "classical songs of Xie Tingfeng" | Head portrait of Xie Tingfeng | 101 |
| Audio set "slow songs" | Static picture of slow songs | 102 |
| Audio set "one singer one signature song" | Static picture of sea | 103 |
| Audio set "old love songs" | Static picture of flowers | 104 |
| Audio set "classical songs of Wang Fei" | Head portrait of Wang Fei | 100 |

Fig. 4-14 is a flow chart showing another method for updating a dynamic cover database, according to a schematic embodiment of the present disclosure. As shown in Fig. 4-14, in the second implementable mode, the method includes:
Step 4022c7: the server receives added audio information, the added audio information including a dynamic image.

The added audio information may be uploaded to the server by the server manager through the background terminal such as a computer, or may also be input into the server by a server manager through the input module (such as the I/O interface) of the server.

The added audio information may include audio data and the dynamic image, or may also include the dynamic image only, which is not limited in the embodiment of the present disclosure.

Step 4022c8: the server stores the added audio information into the preset dynamic cover database, wherein the audio information recorded in the preset dynamic cover database includes a dynamic image.

Each piece of audio information stored in the preset dynamic cover database may, as shown in Table 3, include audio data and a dynamic image, and the dynamic image is obtained by processing according to the preset static image. Each piece of audio information may be provided with a unique identifier which facilitates searching for the audio information, each dynamic image may also be provided with a unique identifier which facilitates searching for the dynamic image, and the unique identifiers of the dynamic images are not marked in Table 3. As an example, as shown in Table 3, audio data included in audio information with an identifier 101 is an audio set "classical songs of Xie Tingfeng", and a dynamic image is the dynamic head portrait of Xie Tingfeng. Each piece of audio information stored in the preset cover database may also include the dynamic image only, which is not limiting of the present disclosure.

Step 4023c: the server determines target audio data according to the acquisition request. A process of determining the target audio data according to the acquisition request by the server may refer to Step 4021 a, and will not be repeated in the embodiments of the present disclosure.

Step 4024c: the server determines the dynamic image which is acquired from the dynamic cover database and corresponds to the target audio data as the target cover image.

The cover database is configured to record audio information, and each piece of audio information includes audio data and a dynamic image. If the information recorded in the preset dynamic cover database is shown in Table 3, the dynamic image included in the same audio information with the target audio data may be determined as the dynamic image corresponding to the target audio data. The dynamic cover database is configured to record the audio information, and each piece of audio information may include the audio data and the dynamic image. The dynamic image includes any one of a dynamic picture, a video and dynamic display information, the dynamic display information includes: a dynamic parameter and a static picture, and the dynamic parameter is for indicating a changing characteristic of the display parameter during display of the static picture.

Optionally, in Step 404, the target cover image may be displayed according to content of the target cover image. Fig. 4-15 is a flow chart showing a method for displaying a target cover image, according to a schematic embodiment of the present disclosure. Exemplarily, as shown in Fig. 4-15, the method includes:
Step 4041: the terminal detects the content of the target cover image.
Step 4042: if the target cover image includes dynamic display information, the terminal displays the static picture, and changes the characteristic of the display parameter during display of the static picture according to the dynamic parameter.

The dynamic display information may include a dynamic parameter and a static picture, where the dynamic parameter is for indicating the changing characteristic of the display parameter during display of the static picture, and the dynamic parameter may be the continuously changed value of the display parameter, such as a picture resolution, an image position, the scanning frequency of the display or the refreshing rate of the display.

By regulating the display parameter of the static picture according to the dynamic parameter, the dynamic display effect may be achieved when the static picture is displayed, and a dynamic image may be represented to the user. As an example, it is supposed that the dynamic parameter is a continuously changed value of the image position, two images, i.e. grass and cloud, appear in the static picture, and the dynamic parameter indicates that a position of the grass continuously changes on the display interface of the terminal along a grid line scanning direction and that a position of the cloud continuously changes on the display interface of the terminal along a direction opposite to the grid line scanning direction. Fig. 4-4 is a display image showing continuous change of a static picture, according to a schematic embodiment of the present disclosure. As shown in Fig. 4-4, display images of the same static picture at three continuous adjacent time points are employed as an example, a display time interval between every two display images is a preset time length, the preset time length may, for example, be 0.2 seconds, and the dynamic display effect may be achieved by rapidly and periodically displaying the three display images on the display interface of the terminal.

The grid line scanning direction is the left-to-right direction x in Fig. 4-4.

Therefore, if the target cover image includes dynamic display information, the terminal displays the static picture by adopting a parameter value indicated by the dynamic parameter to achieve the dynamic display effect of the static picture. As an example, the dynamic parameter is the continuously changed value of the scanning frequency of the display, the static picture includes multiple star images, and the terminal may regulate the scanning frequency of the display interface of the display according to the dynamic parameter to achieve the dynamic display effect of the stars twinkling.

It is to be noted that adopting the dynamic display information to display the audio cover is just one method for dynamically displaying the static image, there are many methods during a practical application, and exemplarily, the terminal may display the audio cover according to the indication of the server by adopting an animation technology in the embodiment of the present disclosure. The animation technology refers to a technology of moving a picture or a part of the picture displayed on the display interface according to a certain rule or requirement. There are usually three ways of providing movement on the display interface, i.e. keeping the position unchanged and changing the form; keeping the form unchanged and changing the position; and changing both the position and the form.

For example, in the animation technology, a series of images in continuous actions may be stored in a memory to implement rapid transformation of the images by virtue of a picture object array, the picture object array may be provided for the terminal by the server, and a practical process may refer to the related technology, and will not be repeated in the present disclosure.

Step 4043: if the target cover image includes a dynamic picture, the terminal displays the dynamic picture.

In the embodiment of the present disclosure, the dynamic picture may be a GIF picture, and a storage space occupied by the GIF picture is smaller, and is almost the same as that occupied by the static picture, so that occupation of the memory may be reduced during storage, and in addition, traffic consumed when the terminal acquires the target cover image from the server may be reduced.

Step 4044: if the target cover image includes a video, the terminal displays the video.

It is to be noted that multiple target cover images may be acquired according to each acquisition request, and each target cover image may be a dynamic image, and may also be a static image. Fig. 4-16 is a picture illustrating the display effect of a dynamic cover image, according to an exemplary embodiment. If the acquisition request is configured to request a target cover image of an interface where "greatest song menu" is located, and contains target scene information, the target scene information includes weather and the indicated weather is light rain, the finally acquired target cover images are shown in Fig. 4-16, Fig. 4-16 shows a picture illustrating the display effect of the dynamic audio covers of the interface where "greatest song menu" is located, the interface displays four target cover images, i.e. "classical songs of Wang Fei", "Get-going Travel", "Memory of Innocence" and "one singer one signature song" respectively, a dynamic image "rain drops" is superposed to each cover image for displaying, and moreover, in the dynamic image, a scene in which raindrops whip the screen and flow down along the screen may be displayed to give a feeling to the user that water in dripping on the screen of the terminal, so that the cover images may reflect that the weather of the position of the terminal is rainy weather, a function of prompting the user is realized, and cover image display is more interesting. It is to be noted that the dynamic cover image may be positioned in the image display area 1601 of the display interface 160 when the audio cover is displayed, a display form of another area (such as a text display area or a button display area) of the cover display interface of the terminal is the same as that in the related technology, the terminal may display related information of the audio cover on the other area, and for example, introduction to the audio cover and the like may be displayed in the text display area, and some audio buttons such as a play button may be displayed in the button display area.

Optionally, a changeable lock screen or a changeable framework may be adopted to regulate the display of the dynamic cover image in the process of displaying the target cover image.

It is to be noted that whether the dynamic cover image corresponding to the target audio data is stored in the dynamic cover database or not may be judged before 4023c, and then the acquisition process of the dynamic cover image is executed according to a judgment result, as shown in Fig. 4-17. Fig. 4-17 is a flow chart showing a method for acquiring a target cover image, according to an exemplary embodiment.

Step 021: a server judges whether a dynamic image corresponding to target audio data is stored in a dynamic cover database or not, Step 022 is executed if the dynamic image corresponding to the target audio data is stored in the dynamic cover database, otherwise, Step 023 is executed if the dynamic image corresponding to the target audio data is not stored in the dynamic cover database.

Step 022: the server determines the dynamic image which is acquired from the dynamic cover database and corresponds to the target audio data as a target cover image.

Step 022 is the same as Step 4024c, may refer to the process of Step 4024c, and will not be repeated in the embodiments of the present disclosure.

Step 023: the server determines a target static image acquired according to the target audio data as the target cover image.

The step that the server determines the target static image acquired according to the target audio data as the target cover image may refer to known technology, and will not be repeated in the embodiments of the present disclosure.

Furthermore, if the target cover image is a dynamic cover image, and is obtained by superposing an auxiliary dynamic image to a target static image, Fig. 4-18 is a flow chart showing a cover image display method, according to an exemplary embodiment, as shown in Fig. 4-18, the cover image display method provided by the embodiment of the present disclosure may further include:
Step 031: a server sends a display parameter to a terminal.

The display parameter includes at least one of the following: transparency, a resolution and an image position. Here, the transparency may refer to the transparency of an image, the levels of transparency from an original image to a colorless and transparent image are divided into 100 percent divisions, and the transparency may be represented by percent.

The resolution may be classified in terms of display resolution and image resolution, wherein the display resolution (also called a screen resolution) is precision of a screen image, and refers to pixels which can be displayed by the display; and the image resolution is the number of pixels per inch. The image position may be a coordinate position of the image which is displayed on the display.

Step 032: the terminal sets a display characteristic of an auxiliary dynamic image according to the display parameter.

As shown in Fig. 4-16, if the target cover image T in Fig. 4-16 is obtained by superposing the auxiliary dynamic image "rain drops" to the target static image, i.e. the head portrait of Wang Fei, and the display parameter includes transparency of 50 percent, the terminal sets the transparency of the auxiliary dynamic image during display to be 50 percent according to the display parameter, and when the terminal displays the target cover image T shown in Fig. 4-16, the transparency of "rain drops" is 50 percent.

It is to be noted that the sequence of the steps of the audio cover display method provided by the embodiment of the present disclosure may be properly regulated, the steps may also be correspondingly added and reduced according to circumstances, and any variable method apparent to those skilled in the art within the technical scope of the embodiments of the present disclosure shall fall within the scope of protection of the embodiments of the present disclosure, and will not be repeated here.

From the above, according to the audio cover display method provided by the embodiment of the present disclosure, the server acquires the target cover image according to the acquisition request sent by the terminal, and provides the target cover image for the terminal, and the terminal displays the target cover image; and since the target cover image is a dynamic cover image and/or a static cover image, the display forms of the audio cover are enriched, and the audio cover may be displayed more flexibly.

Fig. 5-1 is a block diagram of a device for displaying an audio cover, according to an exemplary embodiment. The device may be applied to a server 110 shown in Fig. 1, and as shown in Fig. 5-1, the device includes:
a receiving module 501, configured to receive from a terminal an acquisition request requesting a target cover image;
an acquisition module 502, configured to acquire the target cover image according to the acquisition request, wherein the target cover image is a dynamic cover image and/or a static cover image corresponding to audio content; and
a first sending module 503, configured to send the target cover image to the terminal, wherein the terminal is configured to display the target cover image.

From the above, according to the audio cover display device provided by the embodiment of the present disclosure, the acquisition module acquires the target cover image according to the acquisition request sent by the terminal, the sending module provides the target cover image for the terminal, and the terminal displays the target cover image; and since the target cover image is a dynamic cover image and/or a static cover image, display forms of an audio cover are enriched, and the audio cover may be displayed more flexibly.

In one example, Fig. 5-2 is a block diagram of an acquisition module 502, according to an exemplary embodiment. As shown in Fig. 5-2, the acquisition module 502 includes:
a data acquisition sub-module 5021, configured to determine target audio data according to the acquisition request;
a determination sub-module 5022, configured to determine target scene information and a target static image according to the target audio data, wherein the target scene information is for representing a scene characteristic associated with the target audio data;
an image acquisition sub-module 5023, configured to acquire an auxiliary dynamic image associated with the target scene information; and
a processing sub-module 5024, configured to adopt the auxiliary dynamic image to process the target static image to obtain the target cover image.

In the other example, the acquisition request includes target scene information, and the target scene information is for representing a scene characteristic of an environment where a terminal is located. Fig. 5-3 is a block diagram of another acquisition module 502, according to an exemplary embodiment. As shown in Fig. 5-3, the acquisition module 502 includes:
a determination sub-module 5022, configured to acquire a target static image according to the acquisition request;
an image acquisition sub-module 5023, configured to acquire an auxiliary dynamic image associated with the target scene information; and
a processing sub-module 5024, configured to adopt the auxiliary dynamic image to process the target static image to obtain the target cover image.

Fig. 5-4 is a block diagram of an image acquisition sub-module 5023, according to an exemplary embodiment. As shown in Fig. 5-4, the image acquisition sub-module 5023 includes:
a querying sub-module 50231, configured to query a preset relationship between scene information and a dynamic image;
a determination sub-module 50232, configured to, if there exists one dynamic image associated with the target scene information in the preset relationship between scene information and a dynamic image, determine the dynamic image associated with the target scene information as the auxiliary dynamic image; and
a selection sub-module 50233, configured to, if there exist at least two dynamic images associated with the target scene information in the preset relationship between scene information and a dynamic image , select one dynamic image from the at least two dynamic images associated with the target scene information as the auxiliary dynamic image according to a preset rule.

Here, the selection sub-module 50233 is configured to:
randomly select one dynamic image from the at least two dynamic images associated with the target scene information as the auxiliary dynamic image;
or, select a dynamic image which appears the most times from the at least two dynamic images associated with the target scene information as the auxiliary dynamic image;
or, superpose the at least two dynamic images associated with the target scene information to form the auxiliary dynamic image;
or, provide the at least two dynamic images associated with the target scene information for the terminal, receive a selection instruction sent by the terminal, wherein the selection instruction is for indicating a dynamic image selected from the at least two dynamic images associated with the target scene information by a user, and determine the dynamic image selected by the user as the auxiliary dynamic image.

Optionally, the target scene information includes at least one of the following: a season, a geographical location, a landmark, weather, mood and time.

The processing sub-module 5024 is configured to:
superpose the auxiliary dynamic image to the target static image to obtain the target cover image;
or, replace the target static image with the auxiliary dynamic image to obtain the target cover image;
or, combine the auxiliary dynamic image and the target static image to obtain the target cover image.

Fig. 5-5 is a block diagram of another device for displaying an audio cover, according to an exemplary embodiment. The device may be applied to the server 110 shown in Fig. 1, and as shown in Fig. 5-5, the device further includes:
a first judgment module 504, configured to judge whether the auxiliary dynamic image associated with the target scene information is stored in the server or not; and
a first determination module 505, configured to, if the auxiliary dynamic image is not stored in the server, determine the target static image acquired according to the acquisition request as the target cover image.

Optionally, the acquisition module 502 is configured to determine the target audio data according to the acquisition request, and determine a dynamic image which is acquired from a preset dynamic cover database and corresponds to the target audio data as the target cover image, wherein the dynamic cover database is configured to record audio information and each piece of audio information includes audio data and a dynamic image.

Fig. 5-6 is a block diagram of another device for displaying an audio cover, according to an exemplary embodiment. The device may be applied to the server 110 shown in Fig. 1, and as shown in Fig. 5-6, the device further includes:
a second judgment module 506, configured to judge whether the dynamic image corresponding to the target audio data is stored in the dynamic cover database or not; and
a second determination module 507, configured to, if the dynamic image corresponding to the target audio data is not stored in the dynamic cover database, determine the target static image acquired according to the acquisition request as the target cover image.

Fig. 5-7 is a block diagram of another device for displaying an audio cover, according to an exemplary embodiment. The device may be applied to the server 110 shown in Fig. 1, and as shown in Fig. 5-7, the device further includes:
a first information receiving module 508, configured to receive added audio information, the added audio information including audio data and a static image;
an information determination module 509, configured to determine scene information according to the audio data, wherein the scene information is for representing a scene characteristic associated with the audio data;
an image determination module 510, configured to determine an auxiliary dynamic image associated with the scene information;
a processing module 511, configured to adopt the auxiliary dynamic image to process the target static image to obtain a target cover image ;
an updating module 512, configured to adopt the dynamic image to update the added audio information to obtain updated audio information, the updated audio information including the audio data and the dynamic image; and
a first storage module 513, configured to store the updated audio information into the preset dynamic cover database, wherein the audio information recorded in the preset dynamic cover database includes the dynamic image.
Fig. 5-8 is a block diagram of a device for displaying an audio cover, according to another exemplary embodiment. The device may be applied to the server 110 shown in Fig. 1, and as shown in Fig. 5-8, the device further includes:
   a second information receiving module 514, configured to receive added audio information, the added audio information including a dynamic image; and
   a second storage module 515, configured to store the added audio information into the preset dynamic cover database, wherein the audio information recorded in the preset dynamic cover database includes the dynamic image.

Optionally, the target cover image is obtained by superposing the auxiliary dynamic image to the target static image. Fig. 5-9 is a block diagram of a device for displaying an audio cover, according to another exemplary embodiment. The device may be applied to the server 110 shown in Fig. 1, and as shown in Fig. 5-9, the device further includes:
a second sending module, configured to send a display parameter to the terminal, wherein the terminal is configured to set a display characteristic of the auxiliary dynamic image according to the display parameter and the display parameter includes at least one of the following: transparency, a resolution and an image position.

Optionally, the target cover image includes any one of a dynamic picture, a video and dynamic display information, wherein the dynamic display information includes a dynamic parameter and a static picture, wherein the dynamic parameter is for indicating a changing characteristic of the display parameter during display of the static picture. From the above, according to the audio cover display device provided by the embodiment of the present disclosure, the acquisition module acquires the target cover image according to the acquisition request sent by the terminal, the sending module provides the target cover image for the terminal, and the terminal displays the target cover image; since the target cover image is a dynamic cover image and/or a static cover image, the display forms of the audio cover are enriched, and the audio cover may be displayed more flexibly.

Fig. 6-1 is a block diagram of another device for displaying an audio cover, according to another exemplary embodiment. As shown in Fig. 6-1, the device includes:
a first sending module 601, configured to, when an audio cover is required to be acquired, send an acquisition request requesting a target cover image to a server, wherein the server is configured to acquire the target cover image according to the acquisition request and the target cover image is a dynamic cover image and/or a static cover image corresponding to an audio;
a first receiving module 602, configured to receive the target cover image sent by the server; and
a display module 603, configured to, when the audio cover is required to be displayed, display the pre-acquired target cover image.

From the above, according to the audio cover display device provided by the embodiment of the present disclosure, a server acquires a target cover image according to an acquisition request sent by a terminal, and provides the target cover image for the terminal, and the terminal displays the target cover image; since the target cover image is a dynamic cover image and/or a static cover image, display forms of the audio cover are enriched, and the audio cover may be displayed more flexibly.

Optionally, the display module 603 is configured to display the pre-acquired target cover image in an image display area of a cover display interface of the terminal.

Fig. 6-2 is a block diagram of another device for displaying an audio cover, according to another exemplary embodiment. As shown in Fig. 6-2, the device includes:
a second receiving module 604, configured to receive at least two dynamic images which are provided by the server and associated with target scene information, wherein the target scene information is for representing a scene characteristic associated with target audio data, or, the target scene information is for representing a scene characteristic of an environment where a terminal is located;
a third receiving module 605, configured to receive the dynamic image selected from the at least two dynamic images associated with the target scene information by a user; and
a second sending module 606, configured to send a selection instruction to the server, wherein the selection instruction includes the dynamic image selected by the user and the server is configured to determine the dynamic image selected by the user as an auxiliary dynamic image.

Optionally, the target cover image is obtained by superposing an auxiliary dynamic image to a target static image. Fig. 6-3 is a block diagram of another device for displaying an audio cover, according to another exemplary embodiment. As shown in Fig. 6-3, the device includes:
a fourth receiving module 607, configured to receive a display parameter sent by the server; and
a setting module 608, configured to set a display characteristic of the auxiliary dynamic image according to the display parameter, wherein the display parameter includes at least one of followings: transparency, a resolution and an image position.

Optionally, the target cover image includes any one of a dynamic picture, a video and dynamic display information, wherein the dynamic display information includes a dynamic parameter and a static picture, wherein the dynamic parameter is for indicating a changing characteristic of the display parameter during display of the static picture, and the display module 603 is configured to:
detect content of the target cover image; and
if the target cover image includes the dynamic display information, display the static picture, and change the characteristic of the display parameter during display of the static picture according to the dynamic parameter.

Optionally, the acquisition request includes target scene information, wherein the target scene information is for representing a scene characteristic of an environment where a terminal is located. Fig. 6-4 is a block diagram of another device for displaying an audio cover, according to another exemplary embodiment. As shown in Fig. 6-4, the device further includes a scene information determination module 609, wherein the scene information determination module 609 is configured to:
determine the target scene information through an App which is installed in the terminal and associated with the target scene information;
or, display scene information prompting options, and receive target scene information selected in the scene information prompting options by the user;
or, display a scene information input box, and receive target scene information input in the scene information input box by the user;
or, send an information acquisition request to a function server having a target scene information determination function, and receive target scene information sent by the function server.

Optionally, the target scene information includes at least one of followings: a season, a geographical location, a landmark, weather, mood and time.

From the above, according to the audio cover display device provided by the embodiment of the present disclosure, a server acquires a target cover image according to an acquisition request sent by a terminal, and provides the target cover image for the terminal, and the terminal displays the target cover image; since the target cover image is a dynamic cover image and/or a static cover image, the display forms of the audio cover are enriched, and the audio cover may be displayed more flexibly.

Fig. 7 is a schematic diagram illustrating an audio cover display system 70, according to an exemplary embodiment. As shown in Fig. 7, the audio cover display system 70 includes a server 701 and a terminal 702, wherein
the server 701 includes the audio cover display device shown in Fig. 5-1, Fig. 5-5, Fig. 5-6, Fig. 5-7 or Fig. 5-8; and
the terminal 702 includes the audio cover display device shown in Figs. 6-1 to Fig. 6-4. Furthermore, an embodiment of the present disclosure also provides a device for displaying an audio cover, which includes:
a processor; and
a memory configured to store an instruction executable by the processor,
wherein the processor is configured to:
   receive, from a terminal, an acquisition request requesting a target cover image;
   acquire the target cover image according to the acquisition request, wherein the target cover image is a dynamic cover image and/or a static cover image corresponding to an audio; and
   send the target cover image to the terminal, wherein the terminal is configured to display the target cover image.

An embodiment of the present disclosure further provides a device for displaying an audio cover, which includes:
a processor; and
a memory configured to store an instruction executable by the processor,
wherein the processor is configured to:
   when an audio cover is required to be acquired, send an acquisition request of requesting for a target cover image to a server, wherein the server is configured to acquire the target cover image according to the acquisition request and the target cover image is a dynamic cover image and/or a static cover image corresponding to an audio;
   receive the target cover image sent by the server; and
   when the audio cover is required to be displayed, display the pre-acquired target cover image.

Fig. 7 is a schematic diagram illustrating an audio cover display system 70, according to an exemplary embodiment. As shown in Fig. 7, the audio cover display system 70 includes a server 701 and a terminal 702, wherein
the server 701 includes the audio cover display device shown in Fig. 5-1, Fig. 5-4 or Fig. 5-5; and
the terminal 702 includes the audio cover display device shown in Fig. 6-1 to Fig. 6-4.

Fig. 8 is a block diagram of a device for displaying an audio cover 800, according to an exemplary embodiment. For example, the device 800 may be provided as a server. Referring to Fig. 8, the device 800 includes a processing component 822, which further includes one or more processors, and a memory resource represented by a memory 832, configured to store instructions such as application programs executable by the processing component 822. The application programs stored in the memory 832 may include one or more than one module which each corresponds to a set of instructions. In addition, the processing component 822 is configured to execute the instructions to execute the abovementioned audio cover display method.

The device 800 may further include a power component 826 configured to execute power mangement of the device 800, a wired or wireless network interface 850 configured to connect the device 800 to a network, and an I/O interface 858. The device 800 may be operated on the basis of an operating system stored in the memory 832, such as Windows ServerTM, Mac OS XTM, UnixTM, LinuxTM or FreeBSDTM.

Fig. 9 is a block diagram of a device for displaying an audio cover 900, according to an exemplary embodiment. For example, the device 900 may be a mobile phone, a computer, a digital broadcast terminal, a message transceiver device, a gaming console, a tablet device, a medical device, fitness equipment, a personal digital assistant and the like.

Referring to Fig. 9, the device 900 may include one or more of the following components: a processing component 902, a memory 904, a power component 906, a multimedia component 908, an audio component 910, an I/O interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the abovementioned methods. Moreover, the processing component 902 may include one or more modules which facilitate interaction between the processing component 902 and the other components. For instance, the processing component 902 may include a multimedia module to facilitate interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk.

The power component 906 provides power for various components of the device 900. The power component 906 may include a power management system, one or more power supplies, and any other components associated with the generation, management and distribution of power in the device 900.

The multimedia component 908 includes a display interface providing an output interface between the device 900 and a user. In some embodiments, the display interface may include a Liquid Crystal Display (LCD) and a Touch Panel (TP). If the display interface includes the TP, the display interface may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 908 includes a front camera and/or a rear camera. The front camera and/or the rear camera may receive external multimedia data when the device 900 is in an operation mode, such as a photographing mode or a video mode. Each of the front camera and the rear camera may be a fixed optical lens system or have focus and optical zoom capability.

The audio component 910 is configured to output and/or input an audio signal. For example, the audio component 910 includes a microphone (MIC), and the MIC is configured to receive an external audio signal when the device 900 is in the operation mode, such as a call mode, a recording mode and a voice recognition mode. The received audio signal may be further stored in the memory 904 or sent through the communication component 916. In some embodiments, the audio component 910 further includes a speaker configured to output the audio signal.

The I/O interface 912 provides an interface between the processing component 902 and a peripheral interface module, and the peripheral interface module may be a keyboard, a click wheel, a button and the like. The button may include, but not limited to: a home button, a volume button, a starting button and a locking button.

The sensor component 914 includes one or more sensors configured to provide status assessment of various aspects of the device 900. For instance, the sensor component 914 may detect an open/closed status of the device 900 and relative positioning of components, such as a display and small keyboard of the device 900, and the sensor component 914 may further detect a change in position of the device 900 or a component of the device 900, a presence or absence of contact between the user and the device 900, an orientation or an acceleration/deceleration of the device 900 and a change in temperature of the device 900. The sensor component 914 may include a proximity sensor configured to detect presence of a nearby object without any physical contact. The sensor component 914 may also include a light sensor, such as a Complementary Metal Oxide Semiconductor (CMOS) or Charge Coupled Device (CCD) image sensor, configured for use in an imaging application. In some embodiments, the sensor component 914 may also include an acceleration sensor, a gyroscope sensor, a magnetic sensor, a pressure sensor or a temperature sensor.

The communication component 916 is configured to facilitate wired or wireless communication between the device 900 and other devices. The device 900 may access a wireless network based on a communication standard, such as WiFi, 2G, or 3G, or a combination thereof. In an exemplary embodiment, the communication component 916 receives a broadcast signal or broadcast associated information from an external broadcast management system through a broadcast channel. In an exemplary embodiment, the communication component 916 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 900 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods. In an exemplary embodiment, there is also provided a non-transitory computer-readable storage medium including instructions, such as included in the memory 904, executable by the processor 920 in the device 900, to implement the abovementioned methods. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

According to the non-transitory computer-readable storage medium, when an instruction in the storage medium is executed by the processor of the device 900, the device 900 may execute a method for displaying an audio cover, the method including:
sending an acquisition request of requesting for a target cover image to a server, wherein the server is configured to acquire the target cover image according to the acquisition request and the target cover image is a dynamic cover image;
receiving the target cover image sent by the server; and
displaying the target cover image.
Optionally, the target cover image includes any one of a dynamic picture, a video and dynamic display information, wherein the dynamic display information includes a dynamic parameter and a static picture, wherein the dynamic parameter is for indicating a changing characteristic of the display parameter during display of the static picture, and
displaying the target cover image includes:
   detecting content of the target cover image; and
   if the target cover image includes the dynamic display information, displaying the static picture, and changing the characteristic of the display parameter during display of the static picture according to the dynamic parameter.

Fig. 10 is a schematic diagram illustrating an audio cover display system 100, according to an exemplary embodiment. As shown in Fig. 10, the audio cover display system 100 includes a server 1001 and a terminal 1002, wherein
the server 1001 includes the audio cover display device 800 shown in Fig. 8; and
the terminal 1002 includes the audio cover display device 900 shown in Fig. 9.

Other embodiments of the present disclosure will be apparent to those skilled in the art from consideration of the specification and practice of the embodiments of the present disclosure disclosed here. This application is intended to cover any variations, uses, or adaptations of the embodiments of the present disclosure following the general principles thereof and including such departures from the embodiments of the present disclosure as come within known or customary practice in the art. It is intended that the specification and examples be considered as exemplary only, with a true scope of the embodiments of the present disclosure being indicated by the following claims.

According to the audio cover display method and device provided by the embodiments of the present disclosure, a server acquires a target cover image according to an acquisition request sent by a terminal, and provides the target cover image for the terminal, and the terminal displays the target cover image; since the target cover image is a dynamic cover image and/or a static cover image, the display forms of the audio cover are enriched, and the audio cover may be displayed more flexibly.

It will be appreciated that the embodiments of the present disclosure are not limited to the exact construction that has been described above and illustrated in the accompanying drawings, and that various modifications and changes may be made without departing from the scope thereof. It is intended that the scope of the embodiments of the present disclosure only be limited by the appended claims.

## Claims

1. A method for displaying an audio cover, comprising:
receiving from a terminal an acquisition request requesting a target cover image (201);
acquiring the target cover image according to the acquisition request, wherein the target cover image is a dynamic cover image and/or a static cover image corresponding to an audio(202); and
sending the target cover image to the terminal, wherein the terminal is configured to display the target cover image(203).

2. The method according to claim 1, wherein the acquiring the target cover image according to the acquisition request comprises:
determining target audio data according to the acquisition request;
determining target scene information and a target static image according to the target audio data, wherein the target scene information is for representing a scene characteristic associated with the target audio data;
acquiring an auxiliary dynamic image associated with the target scene information; and
adopting the auxiliary dynamic image to process the target static image to obtain the target cover image.

3. The method according to claim 1 or 2, wherein the acquisition request comprises target scene information, wherein the target scene information is for representing a scene characteristic of an environment where a terminal is located;
the acquiring the target cover image according to the acquisition request comprises:
acquiring a target static image according to the acquisition request;
acquiring an auxiliary dynamic image associated with the target scene information; and
adopting the auxiliary dynamic image to process the target static image to obtain the target cover image.

4. The method according to claim 2 or 3, wherein
the acquiring an auxiliary dynamic image associated with the target scene information comprises:
querying a preset relationship between scene information and a dynamic image;
if there exists one dynamic image associated with the target scene information in the preset relationship between scene information and a dynamic image , determining the dynamic image associated with the target scene information as the auxiliary dynamic image; and
if there exist at least two dynamic images associated with the target scene information in the preset relationship between scene information and a dynamic image , selecting one dynamic image from the at least two dynamic images associated with the target scene information as the auxiliary dynamic image according to a preset rule.

5. The method according to claim 4, wherein the selecting one dynamic image from the at least two dynamic images associated with the target scene information as the auxiliary dynamic image according to a preset rule comprises:
randomly selecting one dynamic image from the at least two dynamic images associated with the target scene information as the auxiliary dynamic image;
or, selecting a dynamic image which appears for most times from the at least two dynamic images associated with the target scene information as the auxiliary dynamic image;
or, superposing the at least two dynamic images associated with the target scene information to form the auxiliary dynamic image;
or, providing the at least two dynamic images associated with the target scene information for the terminal, receiving a selection instruction sent by the terminal, wherein the selection instruction is for indicating a dynamic image selected from the at least two dynamic images associated with the target scene information by a user, and determining the dynamic image selected by the user as the auxiliary dynamic image.

6. The method according to claim 2 or 3, wherein the adopting the auxiliary dynamic image to process the target static image to obtain the target cover image comprises:
superposing the auxiliary dynamic image to the target static image to obtain the target cover image;
or, replacing the target static image with the auxiliary dynamic image to obtain the target cover image;
or, combining the auxiliary dynamic image and the target static image to obtain the target cover image.

7. The method according to claim 2 or 3, further comprising:
judging whether the auxiliary dynamic image associated with the target scene information is stored in a server or not; and
if the auxiliary dynamic image is not stored in the server, determining the target static image acquired according to the acquisition request as the target cover image.

8. The method according to claim 1, wherein
the acquiring the target cover image according to the acquisition request comprises:
determining target audio data according to the acquisition request; and
determining a dynamic image which is acquired from a preset dynamic cover database and corresponds to the target audio data as the target cover image, wherein the dynamic cover database is configured to record audio information and each piece of audio information comprises audio data and a dynamic image.

9. The method according to claim 8, further comprising:
judging whether the dynamic image corresponding to the target audio data is stored in the dynamic cover database or not; and
if the dynamic image corresponding to the target audio data is not stored in the dynamic cover database, determining the target static image acquired according to the acquisition request as the target cover image.

10. The method according to claim 8 or 9, further comprising:
receiving added audio information, wherein the added audio information comprises audio data and a static image;
determining scene information according to the audio data, wherein the scene information is for representing a scene characteristic associated with the audio data;
determining an auxiliary dynamic image associated with the scene information;
adopting the auxiliary dynamic image to process the static image to obtain a dynamic image;
adopting the dynamic image to update the added audio information to obtain updated audio information, wherein the updated audio information comprises the audio data and the dynamic image; and
storing the updated audio information into the preset dynamic cover database, wherein the audio information recorded in the preset dynamic cover database comprises the dynamic image.

11. The method according to claim 8 or 9, further comprising:
receiving added audio information, wherein the added audio information comprises a dynamic image; and
storing the added audio information into the preset dynamic cover database, wherein the audio information recorded in the preset dynamic cover database comprises the dynamic image.

12. The method according to claim 1, wherein
the target cover image comprises any one of a dynamic picture, a video and dynamic display information; and the dynamic display information comprises: a dynamic parameter and a static picture; and the dynamic parameter is for indicating a changing characteristic of the display parameter during display of the static picture.

13. A method for displaying an audio cover, comprising:
when an audio cover is required to be acquired, sending an acquisition request of requesting for a target cover image to a server, wherein the server is configured to acquire the target cover image according to the acquisition request and the target cover image is a dynamic cover image and/or a static cover image corresponding to an audio (301);
receiving the target cover image sent by the server(302); and
when the audio cover is required to be displayed, displaying the pre-acquired target cover image(303).

14. The method according to claim 13, wherein the displaying the pre-acquired target cover image comprises:
displaying the pre-acquired target cover image in an image display area of a cover display interface of a terminal.

15. A device for displaying an audio cover, comprising:
a receiving module (501), configured to receive from a terminal an acquisition request of requesting for a target cover image;
an acquisition module(502), configured to acquire the target cover image according to the acquisition request, wherein the target cover image is a dynamic cover image and/or a static cover image corresponding to an audio; and
a sending module(503), configured to send the target cover image to the terminal, wherein the terminal is configured to display the target cover image.

16. The device according to claim 15, wherein the acquisition module comprises:
a data acquisition sub-module (5021), configured to determine target audio data according to the acquisition request;
a determination sub-module (5022), configured to determine target scene information and a target static image according to the target audio data, wherein the target scene information is for representing a scene characteristic associated with the target audio data;
an image acquisition sub-module (5023), configured to acquire an auxiliary dynamic image associated with the target scene information; and
a processing sub-module (5024), configured to adopt the auxiliary dynamic image to process the target static image to obtain the target cover image.

17. The device according to claim 15, wherein the acquisition request comprises target scene information, wherein the target scene information is for representing a scene characteristic of an environment where a terminal is located;
the acquisition module comprises:
a determination sub-module (5022), configured to acquire a target static image according to the acquisition request;
an image acquisition sub-module (5023), configured to acquire an auxiliary dynamic image associated with the target scene information; and
a processing sub-module (5024), configured to adopt the auxiliary dynamic image to process the target static image to obtain the target cover image.

18. The device according to claim 15, wherein the acquisition module is configured to:
determine target audio data according to the acquisition request; and
determine a dynamic image which is acquired from a preset dynamic cover database and corresponds to the target audio data as the target cover image, wherein the dynamic cover database is configured to record audio information and each piece of audio information comprises audio data and a dynamic image.

19. A device for displaying an audio cover, comprising:
a first sending module (601), configured to, when an audio cover is required to be acquired, send an acquisition request of requesting for a target cover image to a server, wherein the server is configured to acquire the target cover image according to the acquisition request and the target cover image is a dynamic cover image and/or a static cover image corresponding to an audio;
a first receiving module(602), configured to receive the target cover image sent by the server; and
a display module(603), configured to, when the audio cover is required to be displayed, display the pre-acquired target cover image.
